# EUROPEAN PATENT APPLICATION

(11) **EP 4 821 375 A1**
(43) Date of publication of application: **14.10.2026**
(21) Application number: 25222173.4
(22) Date of filing: 10.12.2025
(51) Int. Cl.: A24F 40/485, A24F 40/10

(54) **AEROSOL GENERATING APPARATUS AND AIR REGULATING ASSEMBLY**

(30) Priority: 10.04.2025 CN 202520673988 U; 10.04.2025 CN 202520683268 U; 10.04.2025 CN 202520679725 U; 10.04.2025 CN 202520676904 U
(71) Applicant: Shenzhen Geekvape Technology Co., Ltd., Shenzhen, Guangdong 518100 (CN)
(72) Inventor: ZHANG, Yansheng, Shenzhen, 518100 (CN); WANG, Dongli, Shenzhen, 518100 (CN)
(74) Representative: MERH-IP Matias Erny Reichl Hoffmann Patentanwälte PartG mbB

(57) **Abstract**

An aerosol generating apparatus and an air regulating assembly is provided. The aerosol generating apparatus includes an airflow channel and an air regulating member. The air regulating member includes a fixed portion and an air regulating portion connected with each other. The fixed portion is fixed relative to the airflow channel. The air regulating portion at least partially closes the airflow channel, and is elastically deflected relative to the fixed portion to change the closed area of the airflow channel. The aerosol generating apparatus includes the airflow channel and the air regulating member. The fixed portion of the air regulating member is fixed relative to the airflow channel, and the air regulating portion at least partially closes the airflow channel. The air regulating portion is elastically deflected relative to the fixed portion to change the closed area of the airflow channel, thereby allowing for self-adaptive regulation of airflow.

## Description

### TECHNICAL FIELD

The present application relates to the technical field of aerosol generation, and more particularly to an aerosol generating apparatus and an air regulating assembly.

### BACKGROUND

In an aerosol generating apparatus, the precise regulation of airflow is crucial. It is directly related to the quality, efficiency and user experience of the aerosol generation. Therefore, many aerosol generating apparatus are equipped with air regulating members for fine regulation of airflow. However, these air regulating members usually need to be adjusted manually by the user, adversely affecting the user experience.

### SUMMARY

The purpose of embodiments of the present application is to provide an aerosol generating apparatus and an air regulating assembly to solve a technical problem in the existing art. The technical problem is that the air regulating member in the aerosol generating apparatus needs to be adjusted manually by the user, adversely affecting the user experience.

The technical solution adopted by embodiments of the present application is:
In a first aspect, the embodiments of the present application provide an aerosol generating apparatus. The aerosol generating apparatus includes: an airflow channel and an air regulating member.

The air regulating member includes a fixed portion and an air regulating portion connected with each other. The fixed portion is fixed relative to the airflow channel. The air regulating portion at least partially closes the airflow channel.

The air regulating portion is elastically deflected relative to the fixed portion to change the closed area of the airflow channel.

The aerosol generating apparatus in the embodiments of the present application includes the airflow channel and the air regulating member. The fixed portion of the air regulating member is fixed relative to the airflow channel, and the air regulating portion at least partially closes the airflow channel. The air regulating portion is elastically deflected relative to the fixed portion to change the closed area of the airflow channel, thereby allowing for self-adaptive regulation of airflow, without the need for manual adjustment by the user, and the user experience can be improved.

In an embodiment of the first aspect, the aerosol generating apparatus comprises an air hole component, the air flow channel comprises a first air hole provided on the air hole component; and the air regulating portion at least partially covers the first air hole to at least partially close the air flow channel, and the air regulating portion is configured to: change a distance between the adjustment portion and the first air hole by elastically deflecting relative to the fixed portion, so as to change the closed area of the air flow channel.

In an embodiment of the first aspect, the air regulating portion is arranged along a circumference of the fixed portion.

In an embodiment of the first aspect, wherein the first air hole is one of a plurality of first air holes, the air hole component is provided with the plurality of first air holes, and the plurality of first air holes are distributed along the circumference of the fixed portion.

In an embodiment of the first aspect, a thickness of the air regulating portion gradually decreases from a side close to the fixed portion to a side away from the fixed portion.

In an embodiment of the first aspect, a thickness of the air regulating portion is 0.10 mm to 0.50 mm.

In an embodiment of the first aspect, the air regulating portion completely covers the first air hole; and a side of the air hole component adjacent to the air regulating portion is provided with an air guiding groove, one end of the air guiding groove is in communication with the first air hole, and the other end of the air guiding groove is in communication to outside of the coverage of the adjustment portion.

In an embodiment of the first aspect, the air hole component is provided with a first annular groove along a circumference of an edge of the first air hole, the air regulating portion covers the first annular groove, and the air guiding groove is in communication with the first annular groove, so that the air guide groove and the first air hole are in communication.

In an embodiment of the first aspect, the air hole component is provided with an accommodating groove, the air regulating member is arranged in the accommodating groove, and an annular space is provided between the air regulating member and a side wall of the accommodating groove; and the accommodating groove is provided with a second annular groove along the annular space, and the air guiding groove is in communication with the second annular groove, so that the air guide groove communicates to outside of the coverage of the air regulating portion.

In an embodiment of the first aspect, the air hole component is provided with a locating column, the fixed portion is provided with a locating groove, and the fixed portion is sleeved on the locating column via the locating groove.

In an embodiment of the first aspect, the aerosol generating apparatus further comprises a fixed base, and the fixed base abuts against a side of the fixed portion away from the locating groove.

In an embodiment of the first aspect, the fixed base is provided with a second air hole and an annular flange, the second air hole is defined inside the annular flange, and the first air hole and the second air hole are in communication to form an air flow channel; and the air hole component is provided with a third annular groove along an outer peripheral side of the air regulating member, and the third annular groove is provided with a sealing member, and abuts against the sealing member.

In an embodiment of the first aspect, the fixed base further comprises a limit protrusion facing the air regulating portion, a position of the limit protrusion is opposite to a position of an initial deflection portion of the air regulating portion, and the initial deflection portion is arranged at an edge of the air regulating portion close to the first air hole.

In an embodiment of the first aspect, the fixed portion is connected to a side wall of the air flow channel, and the air regulating portion extends toward the air flow channel, so that the air regulating member at least partially closes the air flow channel.

In an embodiment of the first aspect, the air regulating member is inclined from the fixed portion to the air regulating portion toward an airflow direction of the air flow channel.

In an embodiment of the first aspect, the air regulating member is one of a plurality of air regulating members, the aerosol generating apparatus comprises the plurality of air regulating members, the plurality of air regulating members are arranged along a circumference of the air flow channel to form a conical structure toward the airflow direction.

In an embodiment of the first aspect, a thickness of the air regulating member is 0.1 mm to 0.5 mm.

In an embodiment of the first aspect, the air regulating member and the side wall of the air flow channel are integrally formed.

In an embodiment of the first aspect, the aerosol generating apparatus comprises: a bottom cover, provided with a first air hole; an atomization assembly, provided with a fourth air hole; and an isolation bracket, arranged between the atomization assembly and the bottom cover, and provided with a third air hole, wherein the first air hole, the fourth air hole and the third air hole are in communication to form the air flow channel; and the fixed portion is connected to the isolation bracket, and the air regulating portion extends toward the air flow channel so that the air regulating member at least partially closes the third air hole.

In an embodiment of the first aspect, the isolation bracket and the air regulating member are integrally formed.

In an embodiment of the first aspect, the isolation bracket comprises a bracket main body and a protruding portion, the protruding portion is connected to the bracket main body, and the third air hole is located in the protruding portion and penetrates through the bracket main body; and the fixed portion is connected to the protruding portion, and the air regulating portion is located in the third air hole.

In an embodiment of the first aspect, the aerosol generating apparatus further comprises a main board, wherein the main board is electrically connected to the atomization assembly; and the main board is arranged between the isolation bracket and the bottom cover, and is provided with a locating hole, and the protruding portion penetrates through the locating hole.

In an embodiment of the first aspect, the isolation bracket further comprises an elastically compressible snap-fit portion, the snap-fit portion is arranged outside the protruding portion, and the snap-fit portion is engaged to a side of the main board away from the isolation bracket.

In an embodiment of the first aspect, the aerosol generating apparatus further comprises a fixed base, the main board is connected to the fixed base, and the fixed base is provided with a second air hole; and the fixed base is provided with a locating groove along a circumference of the second air hole, and the protruding portion is arranged in the locating groove, so that the third air hole and the second air hole are in communication.

In an embodiment of the first aspect, the aerosol generating apparatus further comprises a sealing member; the bottom cover is provided with an annular groove, and the sealing member is arranged in the annular groove; and the fixed base comprises an annular flange, the second air hole is arranged in the annular flange, the annular flange is arranged in the annular groove, and abuts against the sealing member.

In an embodiment of the first aspect, the isolation bracket is provided with an accommodating groove on a side toward the atomization assembly, and the accommodating groove is provided with an adsorption member.

In an embodiment of the first aspect, a thickness of the air regulating member gradually decreases from the fixed portion to the air regulating member.

In an embodiment of the first aspect, the air flow channel comprises an initial air flow channel, the air regulating member is one of a plurality of air regulating members, and the plurality of the air regulating members are arranged along a circumference of the initial airflow channel, so that the initial air flow channel is enclosed with the plurality of the air regulating portions.

In an embodiment of the first aspect, the aerosol generating apparatus comprises:
a bottom cover, provided with a first air hole; a fixed base, connected with the bottom cover, and provided with a second air hole, wherein the first air hole and the second air hole are in communication to form an air flow channel; and an air regulating assembly, comprising a base member and a plurality of air regulating members, wherein the base member is provided with a first through hole, the air regulating member is one of the plurality of air regulating members, the plurality of air regulating members are arranged along the circumference of the first through hole, the fixed portion is connected to the base member, the air regulating portion extends toward the first through hole so that the plurality of air regulating members at least partially close the first through hole, and the air regulating portion is elastically deflectable relative to the fixed portion to change a closed area of the first through hole; wherein the air regulating assembly is arranged between the bottom cover and the fixed base, and the first through hole is located between the first air hole and the second air hole.

In an embodiment of the first aspect, the bottom cover is provided with a mounting groove, and the first air hole is located in the mounting groove; the fixed base comprises an annular flange, and the second air hole is arranged in the annular flange; and the air regulating assembly is arranged in the mounting groove, and the annular flange abuts against a side of the base member away from the bottom cover to seal the air flow channel.

In an embodiment of the first aspect, a second side of the air regulating assembly is toward the first air hole.

In an embodiment of the first aspect, the base member is constructed as a sheet, and the air regulating members extend along the extension direction of the base member, so that the air regulating assembly is sheet-like as a whole.

In an embodiment of the first aspect, the first through hole comprises an open initial air flow channel, and the plurality of air regulating members are arranged along the circumference of the initial air flow channel, so that the plurality of air regulating portions enclose to form the initial air flow channel.

In an embodiment of the first aspect, a width of the air regulating member gradually decreases from the fixed portion to the air regulating portion.

In an embodiment of the first aspect, a thickness of the air regulating member gradually decreases from the fixed portion to the air regulating member.

In an embodiment of the first aspect, a thickness of the air regulating member is 0.1 mm to 0.2 mm.

In an embodiment of the first aspect, wherein the base member and the air regulating members are integrally formed.

In an embodiment of the first aspect, the air regulating assembly comprises a first side and a second side opposite to each other, a surface of the first side of the air regulating member is flush with a surface of the first side of the base member, and a surface of the second side of the air regulating member is recessed with respect to a surface of the second side of the base member, such that a thickness of the air regulating member is less than a thickness of the base member.

In an embodiment of the first aspect, the surface of the second side of the air regulating member gradually approaches the surface of the first side from the fixed portion to the air regulating portion, such that a thickness of the air regulating member gradually decreases from the fixed portion to the air regulating portion.

In an embodiment of the first aspect, the air regulating member is made of silicone, rubber, or polyurethane.

In a second aspect, the embodiments of the present application further provide an air regulating assembly for the aerosol generating apparatus. The aerosol generating apparatus includes: a base component and a plurality of air regulating members. The base component is provided with a first through hole.

The plurality of air regulating members are arranged along a circumference of the first through hole, and each of the air regulating member includes a fixed portion and an air regulating portion. The fixed portion is connected with the base component. The air regulating portion extends towards the first through hole, so that the plurality of air regulating members at least partially close the first through hole.

The air regulating portion is elastically deflected relative to the fixed portion to change a closed area of the first through hole.

The air regulating assembly in the embodiment of the application includes a base component and a plurality of air regulating members. Each air regulating member includes a fixed portion and an air regulating portion. The fixed portion is connected with the base component, and the air regulating portion extends towards the first through hole. Under the influence of the airflow force, the air regulating portion is elastically deformed to change the closed area of the first through hole, so that the air regulating assembly realizes self-adaptive airflow adjustment. Additionally, the synergistic effect of the plurality of air regulating members can change the closed area of the first through hole in a larger range, thereby making the change range of the effective flow area wider, and making the adjustable airflow range of the air regulating assembly larger.

### BRIEF DESCRIPTION OF DRAWINGS

In order to more clearly illustrate the technical solutions in the embodiments of the present application, the following briefly introduces the drawings that are required to be used in the embodiments or the exemplary technical description. Obviously, the drawings in the following description merely show some of the embodiments of the present application, and for those skilled in the art, other drawings can be obtained according to these drawings without creative effort.
FIG. 1 is a schematic diagram of an arrangement of an air regulating member in an embodiment of the present application;
FIG. 2 is a schematic diagram of one view of the air regulating member in the embodiment of the present application;
FIG. 3 is a schematic diagram of another view of the air regulating member in the embodiment of the present application;
FIG. 4 is a schematic diagram of a cross section of the air regulating member in the embodiment of the present application;
FIG. 5 is a schematic diagram of a cross section of an aerosol generating apparatus in an embodiment of the present application;
FIG. 6 is an enlarged view of A in FIG. 5;
FIG. 7 is a schematic diagram of a bottom cover in an embodiment of the present application;
FIG. 8 is a front view of a bottom cover of an aerosol generating apparatus in a second embodiment of the present application;
FIG. 9 is an A-A cross-section view of FIG. 8;
FIG. 10 is a perspective view of a bottom cover of an aerosol generating apparatus in the second embodiment of the present application;
FIG. 11 is a schematic diagram of a cross section of an aerosol generating apparatus in the second embodiment of the present application;
FIG. 12 is an enlarged view of B in FIG. 11;
FIG. 13 is a front view of a bottom cover of an aerosol generating apparatus in a third embodiment of the present application;
FIG. 14 is a B-B cross section view of FIG. 13;
FIG. 15 is a perspective view of a bottom cover of an aerosol generating apparatus in the third embodiment of the present application;
FIG. 16 is a schematic diagram of a cross section of an aerosol generating apparatus in the third embodiment of the present application;
FIG. 17 is an enlarged view of C in FIG. 16;
FIG. 18 is a schematic diagram of a perspective view of an air regulating assembly in an embodiment of the present application;
FIG. 19 is a schematic diagram of a plane view of the air regulating assembly in the embodiment of the present application;
FIG. 20 is a sectional schematic view of an air regulating assembly in an embodiment of the present application;
FIG. 21 is a sectional perspective schematic view of an air regulating assembly in an embodiment of the present application;
FIG. 22 is a sectional perspective schematic view of an aerosol generating apparatus in an embodiment of the present application; and
FIG. 23 is an enlarged view of D in FIG. 22.

### DETAILED DESCRIPTION

In order to make the technical problems, technical solutions and beneficial effects of the present application clearer, the present application is further described in detail below with reference to the accompanying drawings and embodiments. It should be understood that the specific embodiments described herein are merely illustrative of the present application and are not intended to limit the present application.

It should be noted that when an element is referred to as being "fixed to/on" or "arranged to/on" another element, it can be directly on the other element or indirectly on the other element. When an element is referred to as being "connected to" another element, it can be directly connected to the other element or indirectly connected to the other element.

It should be understood that the terms "length", "width", "upper", "lower", "front", "rear", "left", "right", "vertical", "horizontal", "top", "bottom", "inner", "outer" and the like are used to indicate the orientation or positional relationship based on the orientation or positional relationship shown in the drawings, and are only for the convenience of describing the present application and simplifying the description, and do not indicate or imply that the apparatus or element referred to must have a specific orientation, be constructed and operated in a specific orientation, and therefore cannot be understood as limiting the present application.

In addition, the terms "first", "second" are used for descriptive purposes only and are not to be construed as indicating or implying relative importance or implicitly indicating the number of indicated technical features. Thus, the features defined with "first", "second" may explicitly or implicitly include one or more of the features. In the description of the present application, the meaning of "a plurality" is two or more, unless otherwise specifically defined.

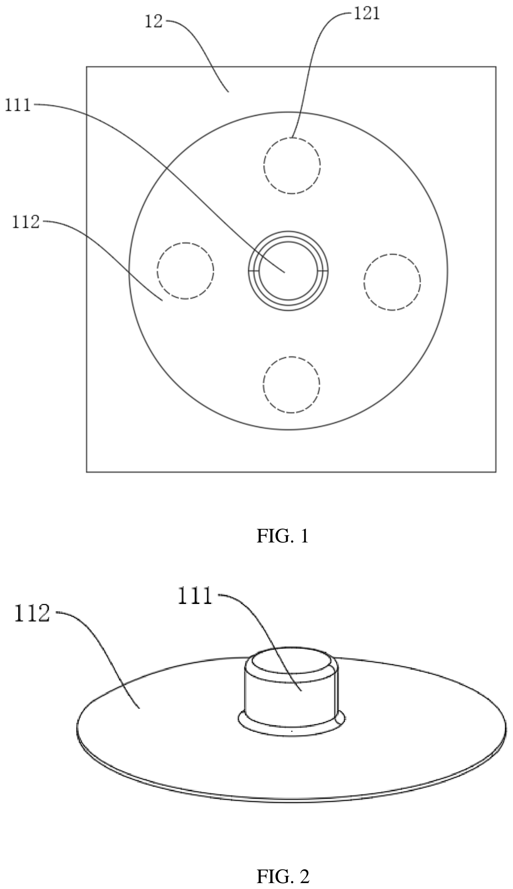

The aerosol generating apparatus provided by the embodiment of the present application is described below. Referring to FIGS. 1 and 2, the aerosol generating apparatus includes:
an airflow channel and
an air regulating member. The air regulating member includes a fixed portion and an air regulating portion connected with each other. The fixed portion is fixed relative to the airflow channel, and the air regulating portion at least partially close the airflow channel.

The air regulating portion is elastically deflected relative to the fixed portion to change the closed area of the airflow channel.

The aerosol generating apparatus generally adopts an atomization assembly to atomize an aerosol generating substrate to generate aerosol for a user to smoke or use. The aerosol generating apparatus is provided with an airflow channel for airflow circulation. In operation of the apparatus, air or other gas enters from an inlet, flows along the airflow channel, interacts with other components in the process of flowing. For example, the air or other gas carries aerosol after atomization through an atomization area, and finally flows out through an outlet for use by a user.

The air hole component 12 in FIG. 1 is provided with a first air hole 121. An airflow channel is formed by the first air hole 121. The airflow channel provides a path for external air to enter the inside of the apparatus. The size, shape, and position of the airflow channel on the air hole component 12 all affect the airflow speed, flow rate, and initial state of the airflow entering the apparatus. The fixed portion 111 of the air regulating member 11 is fixed relative to the air hole component 12, so that the air regulating member 11 cannot move randomly in the operation of the apparatus, and a stable basis is provided for the normal work of the air regulating portion 112. The fixed portion 111 can be directly fixed to the airflow channel or fixed to other components, as long as it is fixed relative to the airflow channel.

The air regulating portion at least partially closes the airflow channel. The air regulating portion is elastically deflectable relative to the fixed portion. When the aerosol generating apparatus is smoked, the change of airflow pressure causes the air regulating portion to elastically deflect relative to the fixed portion, changes the closed area of the airflow channel, and thus realizes self-adaptive adjustment of airflow without manual adjustment by the user, which can improve the user experience.

Referring to FIGS. 1 and 2, the aerosol generating apparatus includes:
the air hole component 12 and the air regulating member 11. The airflow channel includes a first air hole 121 provided on the air hole component 12.

The air regulating member 11 includes a fixed portion 111 and an air regulating portion 112. The air regulating portion 112 is arranged along the circumference of the fixed portion 111. The fixed portion 111 is fixed relative to the air hole component 12. The air regulating portion 112 at least partially covers the first air hole 121.

The air regulating portion 112 is elastically deflectable relative to the fixed portion 111 to change the distance between the air regulating portion 112 and the first air hole 121.

The first air hole 121 provided on the air hole component 12 is the channel port through which the airflow enters the entire aerosol generating apparatus. The air regulating portion 112 is arranged along the circumference of the fixed portion 111 and at least partially covers the first air hole 121, which is the core part for airflow adjustment. When the airflow passes through the first air hole 121, the air regulating portion 112 is subjected to the airflow force, and thus elastically deflects relative to the fixed portion 111 to change the distance between the air regulating portion 112 and the first air hole 121. The change of the distance directly affects the effective ventilation area of the first air hole 121, thereby adjusting rate and speed of airflow flow. For example, when the air regulating portion 112 elastically shifts away from the first air hole 121, the effective ventilation area of the first air hole 121 increases, resulting in an enhanced airflow rate; conversely, when the air regulating portion 112 elastically shifts towards the first air hole 121, the effective ventilation area decreases, resulting in a decreased airflow rate.

As shown in FIG. 1, in the embodiment, the fixed portion 111 is located in the middle of the air regulating member 11, and the air regulating portion 112 is arranged along the circumference of the fixed portion 111, so that the overall structure is simpler. The self-adaptive airflow regulation is directly achieved by using the elastic deformation of the circumferential air regulating portion 112. This design avoids the need for a dedicated flap structure as an elastic deformation component, making it easier to process and assemble, and less prone to damage. For example, the air regulating member 11 can directly adopt a common sheet structure, such as a round sheet or a square sheet. The center of the sheet structure is the fixed portion 111, and the periphery of that is the air regulating portion 112, so that the structure is very simple.

Referring to FIG. 1, in some embodiments of the present application, the air hole component 12 is provided with a plurality of first air holes 121, and the plurality of first air holes 121 are distributed along the circumference of the fixed portion 111. In the embodiment, the plurality of first air holes 121 are distributed along the circumference of the fixed portion 111, and the air regulating portion 112 can simultaneously regulate the ventilation of the plurality of air holes when elastically shifting. Compared with a single air hole, the combination of a plurality of air holes can provide a larger change range of the total area of the airflow channel. When the air regulating portion 112 shifts away from the air holes, the ventilation areas of the plurality of air holes simultaneously increase, so that the airflow entering the apparatus can be greatly increased. Conversely, when the air regulating portion 112 is close to the air holes, the ventilation areas of the plurality of air holes simultaneously decrease, and the airflow can also be greatly reduced. Thus, the regulation range of the airflow is significantly increased to adapt to different use scenarios and requirements.

Referring to FIGS. 2-4, in some embodiments of the present application, the thickness of the air regulating portion 112 gradually decreases from the side close to the fixed portion 111 to the side away from the fixed portion 111. The side of the air regulating portion 112 close to the fixed portion 111 is thicker, which can provide a stable support and connection basis for the air regulating portion 112, and ensure the stability of the connection between the air regulating portion 112 and the fixed portion 111. The side away from the fixed portion 111 gradually thins, so that the mass of the part is reduced, and the rigidity of the material is relatively reduced. When subjected to the airflow force, the thinner end is more likely to elastically deform, thereby enhancing the elastic shifting capability of the whole air regulating portion 112. This means that the air regulating portion 112 can produce obvious elastic shifting under smaller airflow pressure, improve the response sensitivity to airflow change, and more accurately regulate the ventilation area of the first air hole 121.

In some embodiments of the present application, the thickness of the air regulating portion 112 is 0.10 mm to 0.50 mm, so that the air regulating member can ensure sufficient strength to withstand the airflow pressure and maintain a certain elasticity to achieve the airflow regulation function.

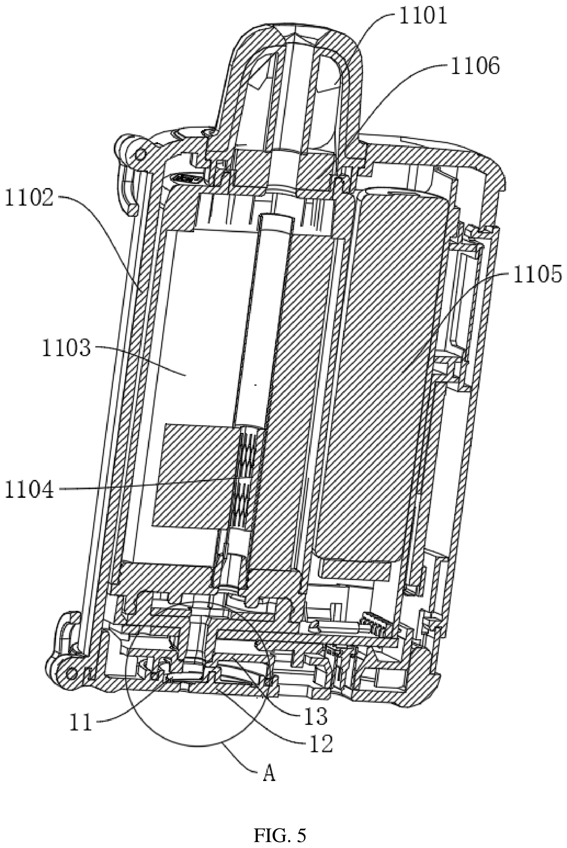

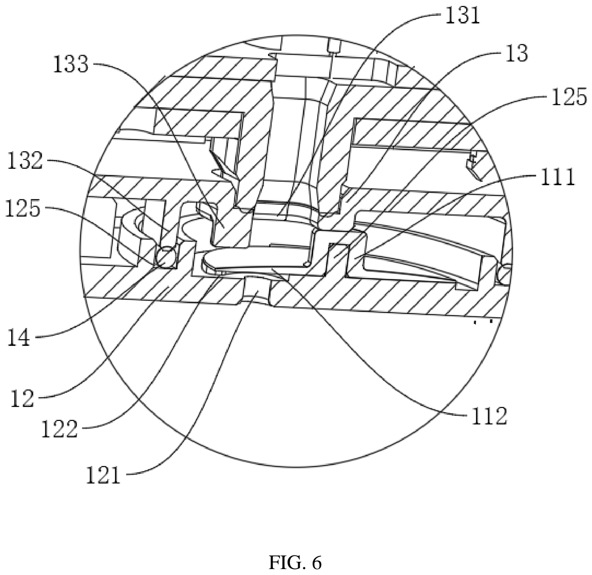

Referring to FIGS. 5 and 6, in some embodiments of the present application, the air regulating portion 112 completely covers the first air hole 121. The air hole component 12 is provided with an air guiding groove 122 near one side of the air regulating portion 112, one end of the air guiding groove 122 is communicated with the first air hole 121, and the other end is communicated outside the coverage of the air regulating portion 112.

In the operation mechanism of the aerosol generating apparatus, the structural design that the air regulating portion 112 completely covers the first air hole 121 is of great significance in airflow regulation, but it also brings a potential problem. When the air regulating portion 112 is in the initial state without deformation, the first air hole 121 is tightly closed, which means that the external airflow cannot directly and smoothly enter the inside of the apparatus from the first air hole 121. In actual application scenarios, for example, during the initial startup of apparatus, if there is no alternative passage for airflow to enter, the air regulating portion 112 is difficult to be deformed by the effective action of the airflow. As a result, its opening process becomes significantly hindered. Because the air regulating portion 112 needs a certain airflow impact force to cause elastic deflection relative to the fixed portion 111, thereby realizing the regulation function of the airflow channel. However, under such completely closed initial conditions, the airflow lacks the opportunity to apply the force, and it is difficult for the air regulating portion 112 to be normally opened.

In view of this, the air guiding groove 122 is arranged on the air hole component 12 in the embodiment. One end of the air guiding groove 122 is communicated with the first air hole 121, and the other end is communicated with the external environment, so that an initial airflow channel is successfully constructed. Even in the initial stage when the air regulating portion 112 has not been deformed, the external airflow can be ingeniously guided by the air guiding groove 122 to flow smoothly to the vicinity of the air regulating portion 112. The airflow flows along the air guiding groove 122, and then impacts the air regulating portion 112, thereby providing the initial power required for the air regulating portion 112 to be opened. With the continuous impact of the airflow, the air regulating portion 112 gradually deforms elastically and starts to deflect away from the first air hole 121, thus, the ventilation area of the first air hole 121 gradually increases. This process allows for the adaptive adjustment of the airflow, and the apparatus can automatically open the air regulating function according to the operating condition of the apparatus and the initial condition of the external airflow. For example, at the startup moment of the apparatus, a weak external airflow first reaches the air regulating portion 112 through the air guiding groove 122, and pushes the air regulating portion 112 to open a small gap. As the airflow continues to enter, the air regulating portion 112 further deflects, allowing more airflow to enter the apparatus, and forming a benign adaptive cycle.

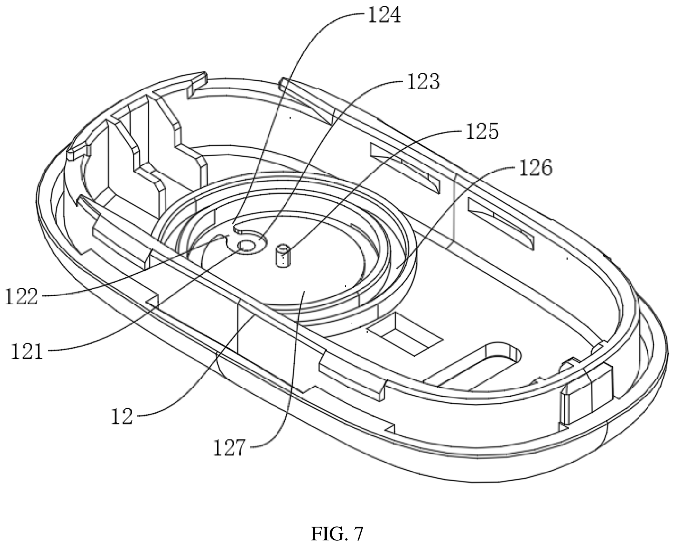

Referring to FIGS. 6 and 7, in some embodiments of the present disclosure, the air hole component 12 is provided with a first annular groove 123 along the circumference of the edge of the first air hole 121. The air regulating portion 112 covers the first annular groove 123, and the air guiding groove 122 is communicated with the first annular groove 123, so that the air guiding groove 122 and the first air hole 121 are communicated.

After the airflow enters through the first air hole 121, it first reaches the first annular groove 123. Since the annular groove is circumferentially arranged along the edge of the first air hole 121, the entering airflow can be preliminarily buffered and uniformly distributed in the annular groove. This avoids the turbulence and local pressure unevenness that can occur when the airflow directly enters the air guiding groove 122. Then, the airflow flows into the air guiding groove 122 from the annular groove. The annular groove plays a role of transition and rectification, so that the airflow can enter the air guiding groove 122 more orderly, and the stability and smoothness of airflow transmission are ensured.

Referring to FIGS. 6 and 7, in some embodiments of the present application, the air hole component 12 is provided with an accommodating groove 127, the air regulating member 11 is arranged in the accommodating groove 127, and an annular space is arranged between the air regulating member 11 and the side wall of the accommodating groove 127. A second annular groove 124 is arranged in the accommodating groove 127 along the annular space. The air guiding groove 122 and the second annular groove 124 are in communication, so that the air guiding groove 122 communicates to outside of the coverage of the air regulating portion 112.

The accommodating groove 127 provides a mounting position for the air regulating member 11, so that the air regulating member 11 can be accurately positioned on the air hole component 12. Thus, the stability of the air regulating member 11 in the apparatus is ensured, thereby effectively playing the role of regulating the airflow. The annular space provides a flow space for the airflow, so that the airflow can be uniformly distributed around the air regulating member 11. When the airflow enters from the first air hole 121, it can act more uniformly on the air regulating portion 112 through the annular space, so that the air regulating portion 112 can more sensitively perceive the airflow change, and the airflow size can be more accurately regulated by elastic deflection. The second annular groove 124 is in communication with the air guiding groove 122, further perfecting the transmission path of the airflow. After the airflow enters from the first air hole 121, it passes through the first annular groove 123 and the air guiding groove 122 to reach the second annular groove 124, and then diffuses around the air regulating portion 112 through the annular space. This design enables the airflow to bypass the coverage area of the air regulating portion 112 and act on the air regulating portion 112 from the side, increasing the area and angle of airflow action and improving the sensitivity and accuracy of the air regulating portion 112 in response to the airflow.

The second annular groove 124 also plays a role of buffering the airflow, so that the airflow can be stabilized and homogenized to a certain extent. When the airflow enters the second annular groove 124 from the air guiding groove 122, the speed and pressure of the airflow can be adjusted due to the large space of the annular groove, the fluctuation and turbulence of the airflow are reduced, so that the airflow acting on the air regulating portion 112 is more stable, which is conducive to its precise regulation of the airflow.

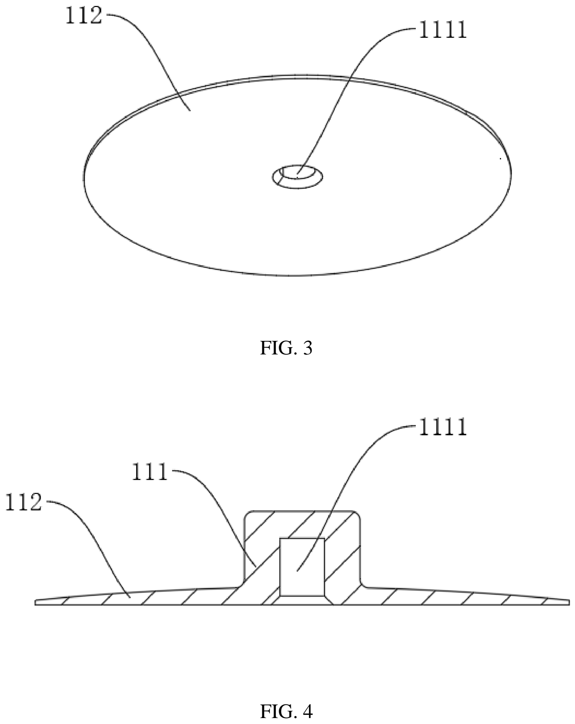

Referring to FIGS. 3, 4, and 6, in some embodiments of the present application, the air hole component 12 is provided with a locating column 125, the fixed portion 111 includes a locating groove 1111, and the fixed portion 111 is sleeved on the locating column 125 through the locating groove 1111. The cooperation of the locating column 125 and the locating groove 1111 provides a precise positioning reference for the installation of the air regulating member 11 on the air hole component 12. During the assembly process, the operator only needs to align the locating groove 1111 with the locating column 125 and fit it in, so as to ensure that the air regulating member 11 is accurately installed at the predetermined position. This greatly reduces the error in the installation process, ensures the relative position accuracy between the air regulating member 11 and the air hole component 12, and enables the air regulating portion 112 to accurately cover the first air hole 121, thereby laying a foundation for subsequent accurate airflow regulation.

Referring to FIG. 6, in some embodiments of the present application, the aerosol generating apparatus further includes a fixing member 13, which is abutted against the side of the fixed portion 111 away from the locating groove 1111. The cooperation of the locating column 125 and the locating groove 1111 has provided a certain basis for the fixation of the air regulating member 11, but the fixing member 13 is abutted against the side of the fixed portion 111 away from the locating groove 1111, further enhancing the fixation effect of the air regulating member 11. It applies pressure from another direction, preventing the air regulating member 11 from being detached from the locating column 125 due to external forces such as the impact force of airflow and vibration during use. For example, when the aerosol generating apparatus is in operation, the airflow will generate a large force on the air regulating member 11, and the presence of the fixing member 13 can ensure that the air regulating member 11 is always kept in the accurate position, maintaining the stable airflow regulation function.

The abutment of the fixing member 13 can effectively reduce the relative looseness and displacement between the air regulating member 11 and the air hole component 12. Even in the case of long-term use or frequent vibration, the fixing member 13 can continuously maintain the pressure on the fixed portion 111, tightly connecting the air regulating member 11 and the air hole component 12, and ensuring the stability of the apparatus structure.

Referring to FIG. 6, in some embodiments of the present application, the fixing member 13 is provided with a second air hole 131, and is provided with an annular flange 132. The second air hole 131 is arranged inside the annular flange 132, and the first air hole 121 and the second air hole 131 are communicated to form an airflow channel.

The air hole component 12 is provided with a third annular groove along the outer circumferential side of the air regulating member 11. The third annular groove is provided with a sealing member 14, and the annular flange 132 is arranged in the third annular groove and abutted against the sealing member 14.

The second air hole 131 on the fixing member 13 is communicated with the first air hole 121 of the air hole component 12, and the two together constitute a continuous and smooth airflow channel. This creates conditions for external air to enter the inside of the aerosol generating apparatus, ensuring that the airflow can flow according to the preset path, and providing necessary air supply for aerosol generation.

The annular flange 132 encloses the second air hole 131 inside, and this structure can guide and rectify the airflow. It makes the airflow more concentrated and orderly when entering the second air hole 131, reduces the turbulence and dispersion of the airflow, and improves the stability and uniformity of the airflow. Stable and uniform airflow helps to improve the quality and efficiency of aerosol generation, making the generated aerosol particles finer and more evenly distributed.

A sealing member 14 is arranged in the third annular groove on the air hole component 12, and the annular flange 132 of the fixing member 13 is arranged in the third annular groove and abutted against the sealing member 14, so that an effective sealing mechanism is formed. It can prevent the airflow from leaking out of the connection part of the fixing member 13 and the air hole component 12, and ensure that the airflow passes through the airflow channel formed by the first air hole 121 and the second air hole 131.

Referring to FIG. 6, in some embodiments of the present application, the fixing member 13 further includes a limit protrusion 133 towards the air regulating portion 112. The limit protrusion 133 is located opposite to the initial deflection portion of the air regulating portion 112, and the initial deflection portion is the edge portion of the air regulating portion 112 close to the first air hole 121. The limit protrusion 133 can effectively limit the elastic deflection range of the air regulating portion 112. The air regulating portion 112 will be elastically deformed under the action of the airflow, and the limit protrusion 133 is located opposite to the initial deflection portion of the air regulating portion 112 close to the edge of the first air hole 121. When the deflection of the air regulating portion 112 reaches a certain degree and contacts the limit protrusion 133, the limit protrusion 133 will prevent the air regulating portion 112 from continuing to deflect in this direction.

The air hole component 12 can be any component with an air hole on the airflow channel. In the embodiments shown in FIGS. 5 to 7, the air hole component 12 is the bottom cover of the aerosol generating apparatus. The first air hole 121 is arranged on the bottom cover, and the air regulating member 11 is arranged on the inner side of the bottom cover and at least partially covers the first air hole 121. When the airflow enters the first air hole 121 from the outside, it can impact the air regulating member 11 to cause elastic deflection, change the distance between the air regulating member 11 and the first air hole 121, and change the gas flow area, so as to allow for self-adaptive airflow regulation according to the airflow size and air pressure.

As shown in FIG. 5, in some embodiments, the aerosol generating apparatus further includes a mouthpiece 1101, a shell assembly 1102, a liquid reservoir assembly 1103, an atomization assembly 1104, and a battery assembly 1105, etc. The liquid reservoir assembly 1103 is provided with an atomization cavity and a liquid storage cavity, the liquid storage cavity and the atomization cavity are communicated through a liquid guide structure. The atomization assembly 1104 is arranged in the atomization cavity, and the battery assembly 1105 is connected with the liquid reservoir assembly 1103. The mouthpiece 1101 is connected with the shell assembly 1102 in a buckle manner, and an oil absorption assembly 1106 is further arranged at the mouthpiece 1101. The bottom cover and the fixed base construct the basic airflow channel structure, ensuring that the external airflow can enter the apparatus in an orderly manner. The mouthpiece 1101 as a component directly contacted by a user is connected with the shell assembly 1102 through buckling, and this connection manner is not only convenient for installation and disassembly and beneficial for later maintenance, but also can ensure structural stability. The oil absorption assembly 1106 arranged at the mouthpiece 1101 can effectively prevent the liquid in the liquid reservoir from entering the oral cavity along with the airflow during use, thereby improving the use experience and safety.

The shell assembly 1102 not only provides protection for the internal components, but also affects the overall appearance and portability of the apparatus to some extent. The liquid reservoir assembly 1103 is a key part, and is internally provided with an atomization cavity and a liquid storage cavity, which are connected through a liquid guiding structure. The liquid storage cavity is used for storing liquid raw materials, and the liquid guiding structure can accurately control the liquid flow to the atomization cavity, thereby providing a stable raw material supply for the atomization process. The atomization assembly 1104 in the atomization cavity converts the liquid entering the atomization cavity into aerosol under the driving of the electric energy provided by the battery assembly 1105. The battery assembly 1105 is connected with the liquid reservoir assembly 1103, not only supplies power for the atomization assembly 1104, but also cooperates with the circuit system of the whole apparatus to ensure the orderly operation of each component. The power reserve and power supply stability thereof directly affect the endurance and performance of the apparatus.

The material can be silicone, rubber, or polyurethane. The silicone has good elasticity, high and low temperature resistance, chemical stability, and no toxicity and odor. The rubber has good elasticity, sealing performance, wear resistance, and fatigue resistance. The polyurethane has high strength, good elasticity, oil resistance, and solvent resistance, and its hardness and flexibility can be adjusted according to requirements. At present, the silicone is most commonly used, which can be made of medical-grade silicone material, has good biocompatibility, does not harm human health, and ensures the safety of the user.

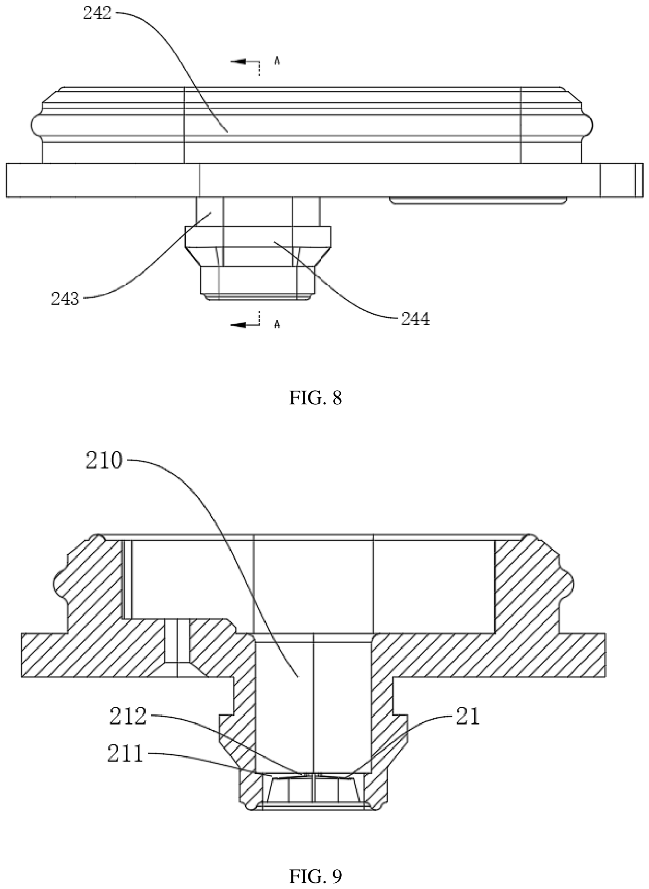

Referring to FIGS. 8 to 10, an aerosol generating apparatus according to an embodiment of the present disclosure will be described. The aerosol generating apparatus includes:
a channel member provided with an airflow channel 210, and
an air regulating member 21. The air regulating member 21 including a fixed portion 211 and an air regulating portion. The fixed portion 211 is connected with the channel member. The air regulating portion extends towards the airflow channel 210 to at least partially close the airflow channel 210. The air regulating portion is elastically deflected relative to the fixed portion 211 to change a closed area of the airflow channel 210.

The air regulating member 21 and the channel member are integrally formed.

The aerosol generating apparatus generally utilizes the atomization assembly 2104 to atomize the aerosol generating substrate, thereby generating aerosol for the user to smoke or use. The aerosol generating apparatus is provided with an airflow channel 210 for airflow circulation. In operation of the apparatus, air or other gas enters from the inlet, flows along the airflow channel 210, interacts with other components in the process of flowing, for example, carries the atomized aerosol through the atomization area, and finally flows out from the outlet for the user to use.

In this embodiment, the channel component is a component of the aerosol generating apparatus having the airflow channel 210, and can be, for example, a bottom shell, an internal support, or the like of the aerosol generating apparatus, especially a component suitable for arranging the air regulating member 21.

The air regulating member 21 is a key component for achieving the air regulating function. It has a fixed portion 211 and an air regulating portion, the fixed portion 211 is connected to the channel component and plays a role of supporting, thereby ensuring that the air regulating member 21 is fixed in position in the apparatus. The air regulating portion extends into the airflow channel 210 and can at least partially close the airflow channel 210. When airflow passes through, the air regulating portion can elastically shift relative to the fixed portion 211 according to factors such as the pressure and speed of the airflow. This elastic shift allows the closed area of the airflow channel 210 to change, thereby adaptively adjusting the flow rate and speed of the airflow. For example, when the airflow pressure increases, the air regulating portion elastically shifts to one side, increasing the closed area of the airflow channel 210 and reducing the airflow flow rate; conversely, when the airflow pressure decreases, the air regulating portion recovers somewhat, reducing the closed area of the airflow channel 210 and increasing the airflow flow rate.

In this embodiment, the air regulating member 21 and the channel component having the airflow channel 210 are integrally formed, and the air regulating member 21 and the channel component are shaped as a whole from the beginning of manufacturing. This manner directly reduces the number of parts, eliminates the need to separately manufacture two independent parts, and greatly simplifies the originally complex assembly process. In the existing assembly process, the parts need to be positioned, aligned, and connected, which consumes a lot of time and effort. In this application, the integrally formed component only needs to be mounted to the corresponding position of the apparatus, greatly shortening the assembly time and significantly improving the assembly efficiency. Moreover, reducing the number of parts and simplifying the assembly process also reduces the error probability in the production process, improves the consistency and quality stability of the product, and lays a solid foundation for efficient and reliable production of the aerosol generating apparatus.

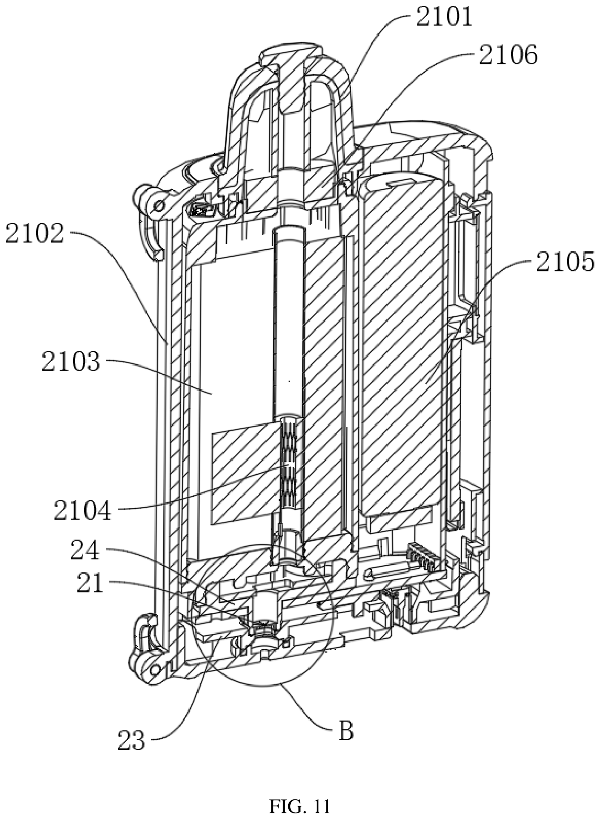

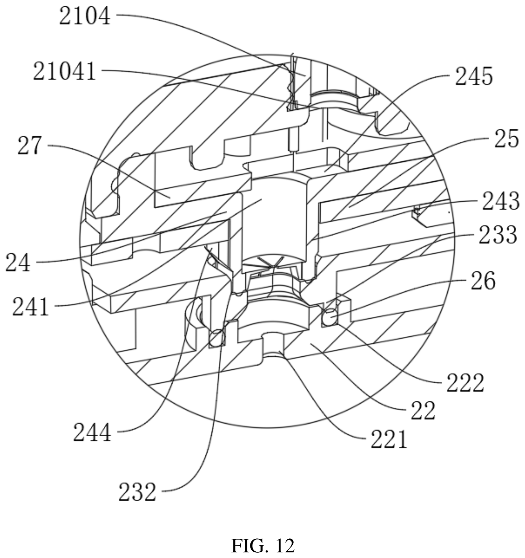

Referring to FIGS. 11 and 12, in some embodiments of the present disclosure, an aerosol generating apparatus includes: a bottom cover 22, an atomization assembly 2104, an isolation bracket 24, and a fixed portion 211.

The bottom cover 22 is provided with a first air hole 221.

The atomization assembly 2104 is provided with a fourth air hole 21041.

The isolation bracket 24 is disposed between the atomization assembly 2104 and the bottom cover 22, and is provided with a third air hole 241. The first air hole 221, the fourth air hole 21041, and the third air hole 241 are communicated to form an airflow channel 210.

The fixed portion 211 is connected to the isolation bracket 24, and the air regulating portion extends into the airflow channel 210, so that the air regulating member 21 at least partially closes the third air hole 241.

In this embodiment, the aerosol generating apparatus is composed of the bottom cover 22, the atomization assembly 2104, the isolation bracket 24, and the like. The first air hole 221 on the bottom cover 22 is the starting end of the whole airflow channel 210, and is responsible for guiding external air into the inside of the apparatus. The atomization assembly 2104 is provided with a fourth air hole 21041, which is a key area for aerosol generation. The airflow passing through the fourth air hole 21041 will carry the atomized substance. The isolation bracket 24 is arranged between the atomization assembly 2104 and the bottom cover 22, and a third air hole 241 on the isolation bracket 24 connects the first air hole 221 and the fourth air hole 21041, so that the three are communicated to form the complete airflow channel 210.

The fixed portion 211 of the air regulating member 21 is connected to the isolation bracket 24, and the air regulating portion extends to the airflow channel 210 and at least partially closes the third air hole 241. This arrangement enables the air regulating member 21 to directly regulate the airflow passing through the third air hole 241. This mounting manner of the air regulating member 21 not only ensures the stability of the air regulating member 21, but also enables the air regulating portion to effectively act on the airflow, thereby achieving the control of the airflow.

In some embodiments, the aerosol generating apparatus further includes a mouthpiece 2101, a shell assembly 2102, a liquid reservoir assembly 2103, an atomization assembly 2104, and a battery assembly 2105, etc. The liquid reservoir assembly 2103 is internally provided with an atomization cavity and a liquid storage cavity, and the liquid storage cavity and the atomization cavity are communicated through a liquid guiding structure. The atomization assembly 2104 is arranged in the atomization cavity. The battery assembly 2105 is connected with the liquid reservoir assembly 2103. The mouthpiece 2101 is connected with the shell assembly 2102 through buckling, and an oil absorption assembly 2106 is further arranged at the mouthpiece 2101. The bottom cover 22 and the fixed base 23 construct the basic airflow channel 210 structure, thereby ensuring that the external airflow can orderly enter the inside of the apparatus. The mouthpiece 2101 as a component directly contacted by a user is connected with the shell assembly 2102 through buckling, which is convenient for installation and disassembly, facilitates later maintenance, and ensures structural stability. The oil absorption assembly 2106 arranged at the mouthpiece 2101 can effectively prevent the liquid in the liquid storage bin from entering the oral cavity along with the airflow during use, thereby improving the use experience and safety.

The shell assembly 2102 not only provides protection for the internal components, but also affects the overall appearance and portability of the apparatus to some extent. The liquid reservoir assembly 2103 is a key part, and is internally provided with an atomization cavity and a liquid storage cavity, which are connected through a liquid guiding structure. The liquid storage cavity is used for storing liquid raw materials, and the liquid guiding structure can accurately control the liquid flow to the atomization cavity, thereby providing a stable raw material supply for the atomization process. The atomization assembly 2104 in the atomization cavity converts the liquid entering the atomization cavity into aerosol under the driving of the electric energy provided by the battery assembly 2105. The battery assembly 2105 is connected with the liquid reservoir assembly 2103, not only supplies power for the atomization assembly 2104, but also cooperates with the circuit system of the whole apparatus to ensure the orderly operation of each component, and the power reserve and power supply stability thereof directly affect the endurance and performance of the apparatus.

In some embodiments of the present application, as shown in FIG. 8, FIG. 9 and FIG. 10, the isolation bracket 24 includes a bracket body 242 and a protruding portion 243 connected to the bracket body 242. The third air hole 241 is located in the protruding portion 243 and penetrates through the bracket body 242. The fixed portion 211 is connected to the protruding portion 243, and the air regulating portion is located in the third air hole 241.

In the embodiment, the isolation bracket 24 is mainly composed of the bracket body 242 and the protruding portion 243 connected to the bracket body 242, and the third air hole 241 is arranged in the protruding portion 243 and penetrates through the bracket body 242. The fixed portion 211 of the air regulating member 21 is connected to the protruding portion 243, thereby ensuring stable installation of the air regulating member 21 as a whole. The air regulating portion is located in the third air hole 241, thereby being protected in multiple aspects. From the physical aspect, the third air hole 241 can prevent the air regulating portion from being damaged due to accidental collision inside the apparatus. When the apparatus is in operation, internal components can be displaced due to vibration, and if the air regulating portion is exposed, it is prone to friction or collision with other components, resulting in deformation or even damage and affecting the air regulating function of the air regulating member 21. However, in the third air hole 241, the air regulating portion is effectively isolated, thereby greatly reducing such risks.

From the perspective of air flow influence, the third air hole 241 has a certain flow regulating effect on the incoming air flow. When the air flow enters from the first air hole 221 of the bottom cover 22, flows through the third air hole 241 and flows to the fourth air hole 21041 of the atomization assembly 2104, the direction and speed of the air flow are regulated to a certain extent during the process of passing through the third air hole 241. This avoids excessive impact force of the turbulent air flow on the air regulating portion, prevents the air regulating portion from being excessively deformed due to bearing abnormal air flow impact, and further ensures that the air regulating portion can always work within a proper elastic deformation range and maintain the accuracy of air flow regulation.

Referring to FIG. 11 and FIG. 12, in some embodiments of the present application, the aerosol generating apparatus further includes a main board 25. The main board 25 and the atomization assembly 2104 are electrically connected. The main board 25 is arranged between the isolation bracket 24 and the bottom cover 22. The main board 25 is provided with a positioning hole, and the protruding portion 243 is arranged in the positioning hole.

In the embodiment, the main board 25 and the atomization assembly 2104 are electrically connected, the main board 25 can provide power support for the atomization assembly 2104, and the working state of the atomization assembly 2104 is controlled. The main board 25 is arranged between the isolation bracket 24 and the bottom cover 22, and this position arrangement has multiple considerations. On the one hand, placing the main board 25 at this position can make full use of the space inside the apparatus, and the layout of each component is more compact and reasonable. On the other hand, such a position can isolate the atomization assembly 2104 and the main board 25 through the isolation bracket 24, thereby preventing the atomization assembly 2104 from affecting the normal working of the main board 25.

The positioning hole defined on the main board 25 is matched with the protruding portion 243 of the isolation bracket 24, and the protruding portion 243 is arranged in the positioning hole. The design plays an accurate positioning role, and ensures the accurate position of the isolation bracket 24 in the apparatus. In the assembly process of the apparatus, the isolation bracket 24 can be quickly and accurately installed by inserting the protruding portion 243 into the positioning hole, and the assembly efficiency is improved. Due to the accurate installation of the isolation bracket 24, the position accuracy of the third air hole 241 is ensured, and the normal operation of the airflow channel 210 is ensured.

Referring to FIGS. 8 and 12, in some embodiments of the present application, the isolation bracket 24 further includes an elastically compressible snap-fit portion 244. The snap-fit portion 244 is arranged outside the protruding portion 243, and the snap-fit portion 244 is clamped on a side of the main board 25 away from the isolation bracket 24. The snap-fit portion 244 of the isolation bracket 24 has the characteristic of being elastically compressible. This means that it can be elastically deformed when subjected to an external force, and can return to the original shape after the external force disappears. This elastic property enables the snap-fit portion 244 to directly force the protruding portion 243 to pass through the main board 25 when matched with the main board 25, thereby realizing clamping.

In some embodiments of the present application, the isolation bracket 24 includes a plurality of snap-fit portions 244, and the plurality of snap-fit portions 244 are arranged at intervals along the circumference of the protruding portion 243, so that the snap-fit portions 244 are more easily compressed, thereby improving the assembly convenience.

Referring to FIGS. 11 and 12, in some embodiments of the present application, the aerosol generating apparatus includes a fixed base 23, the main board 25 is connected to the fixed base 23, and the fixed base 23 is provided with a second air hole 231. The fixed base 23 is provided with a positioning groove 232 along the circumference of the second air hole 231, and the protruding portion 243 is arranged in the positioning groove 232, so that the third air hole 241 and the second air hole 231 are communicated.

In this embodiment, the fixed base 23 provides an important structural support for the entire aerosol generating apparatus, and the main board 25 is connected to the fixed base 23, so that the main board 25 has a stable mounting position in the apparatus. This helps to ensure that the electronic components and circuit systems on the main board 25 remain stable during the operation of the apparatus, avoiding problems such as poor electrical connection or component damage caused by shaking or displacement, thereby ensuring the stable and reliable electrical performance of the apparatus. The second air hole 231 provided on the fixed base 23 is communicated with the third air hole 241 on the isolation bracket 24, ensuring the circulation of airflow.

The positioning groove 232 provided on the fixed base 23 along the circumference of the second air hole 231 is matched with the protruding portion 243 of the isolation bracket 24. The protruding portion 243 is arranged in the positioning groove 232, and this design plays an accurate positioning role. It ensures that the isolation bracket 24 is accurately positioned on the fixed base 23, so that the third air hole 241 and the second air hole 231 are accurately aligned and communicated, thereby ensuring that the airflow can smoothly pass through the two air holes and cannot be blocked or leaked due to positional deviation.

Referring to FIGS. 11 and 12, in some embodiments of the present application, the aerosol generating apparatus further includes a sealing member 26. The bottom cover 22 is provided with an annular groove 222, and the sealing member 26 is arranged in the annular groove 222. The fixed base 23 includes an annular flange 233, the second air hole 231 is arranged in the annular flange 233, the annular flange 233 is arranged in the annular groove 222, and the annular flange 233 abuts against the sealing member 26.

In the embodiment, the annular groove 222 provided on the bottom cover 22 is a mounting position for the sealing member 26. The annular groove 222 is sized and shaped to fit the sealing member 26, and can accurately accommodate the sealing member 26 to keep the sealing member 26 in a stable position in the apparatus. The sealing member 26 is arranged in the annular groove 222, and the sealing member 26 is usually made of a material with good elasticity and sealing performance, such as rubber. The sealing member 26 fills the gap between the bottom cover 22 and the fixed base 23, preventing the airflow from leaking from the connection part. During the operation of the apparatus, the sealing member 26 can withstand certain pressure and deformation, and always maintains a good sealing state, ensuring that the airflow can only flow along the predetermined airflow channel 210.

The annular flange 233 of the fixed base 23 corresponds to the annular groove 222 of the bottom cover 22, and the second air hole 231 is arranged in the annular flange 233. The annular flange 233 is arranged in the annular groove 222 and abuts against the sealing member 26. This structural design makes the connection between the fixed base 23 and the bottom cover 22 more compact. The annular flange 233 applies certain pressure to the sealing member 26, causing the sealing member 26 to elastically deform, further filling the tiny gap at the connection part, and enhancing the sealing effect.

Referring to FIG. 12, the isolation bracket 24 is provided, on the side facing the atomization assembly 2104, with an accommodating groove 245 in which an adsorption member is arranged. The accommodating groove 245 is provided on the side of the isolation bracket 24 facing the atomization assembly 2104, and this design provides a specific mounting space for the adsorption member. The adsorption member 27 can be made of oil-absorbing cotton, inorganic fiber material, porous material, etc., and has good adsorption performance. The main function is to adsorb the possible liquid, preventing the liquid from leaking onto the air regulating member 21. In the aerosol generating apparatus, the atomization assembly 2104 can overflow liquid during operation or the liquid can flow when the apparatus is tilted. If the liquid contacts the air regulating member 21, the performance of the air regulating member 21 can be affected, for example, the elastic property of the air regulating member 21 is changed, so that the air regulating member 21 cannot accurately adjust the closed area of the airflow channel 210, thereby affecting the generation of aerosol and the normal operation of the apparatus. The adsorption member can timely absorb the liquid, thereby protecting the air regulating member 21.

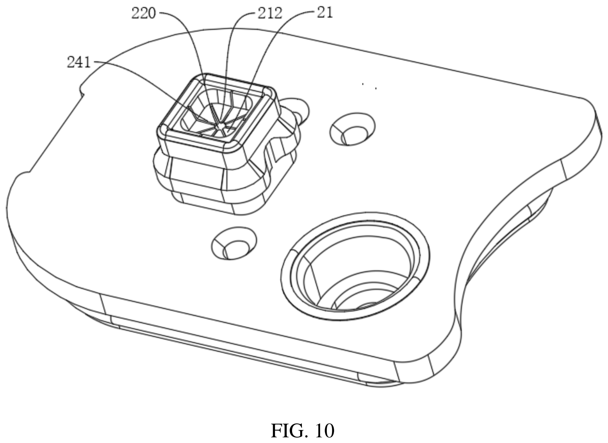

Referring to FIG. 10, in some embodiments of the present application, the aerosol generating apparatus includes a plurality of air regulating members 21, and the plurality of air regulating members 21 are disposed in a circumferential direction of the airflow channel 210. The elastic deflection of a single air regulating member 21 can only change the closed area of the airflow channel 210 within a limited range. When the plurality of air regulating members 21 are disposed in the circumferential direction, they can simultaneously elastically deform, so that the range of change of the closed area of the airflow channel 210 is significantly increased. When all the air regulating members 21 elastically deflect toward the center of the airflow channel 210, the closed area of the airflow channel 210 can be reduced to a lower value, thereby greatly reducing the airflow flow rate. Conversely, when all the air regulating members 21 elastically deflect away from the center of the airflow channel 210, the closed area of the airflow channel 210 can be increased to a higher value, thereby greatly increasing the airflow flow rate. The range of change of the closed area of the airflow channel 210 under the synergistic effect of the plurality of air regulating members 21 is much larger than the adjustment capability of a single air regulating member 21, thereby achieving wider-range airflow adjustment.

Referring to FIG. 10, in some embodiments of the present application, the airflow channel 210 includes an initial airflow channel 220, and the plurality of air regulating members 21 are disposed in a circumferential direction of the initial airflow channel 220, so that the plurality of air regulating portions enclose the initial airflow channel 220.

The airflow channel 210 includes the open initial airflow channel 220, so that the airflow can first flow through the initial airflow channel 220 to form an initial breakthrough, thereby reducing the difficulty in opening the air regulating member 21 due to adhesion or the like. The initial airflow channel 220 is actually enclosed by the air regulating portions in the circumferential direction. When the airflow flows through the initial airflow channel 220, the airflow simultaneously impacts the air regulating portions of the air regulating members 21. Since the air regulating portions are elastic, they elastically deflect under the impact of the airflow, thereby changing the closed area of the initial airflow channel 220. This design ingeniously utilizes the impact force of the airflow to achieve self-regulation of the airflow, thereby reducing the difficulty in opening the air regulating member 21.

Referring to FIG. 9, in some embodiments of the present application, the thickness of the air regulating member 21 gradually decreases from the fixed portion 211 to the air regulating portion. The fixed portion 211 has a larger thickness, and the air regulating portion has a smaller thickness. The thicker fixed portion 211 can better withstand these forces and still maintain good elasticity after multiple deformations, thereby preventing the air regulating member 21 from being damaged or falling off from the fixing portion. The thinner air regulating portion can deform to a certain extent under a smaller airflow pressure, thereby ensuring the sensitivity of airflow adjustment. In addition, the thinner air regulating portion 212 can effectively reduce the mutual adhesion caused by liquid adhesion. This is because the thinner air regulating portion 212 has a smaller area for liquid adhesion, thereby reducing the possibility of adhesion between the plurality of air regulating portions 212.

In some embodiments of the present application, the thickness of the air regulating member 21 is 0.1mm to 0.2mm. So that the air regulating member 21 can ensure that it has sufficient strength to withstand the airflow pressure and maintain a certain elasticity to achieve the airflow regulating function. The material of the integrally formed structure can be silicone, rubber or polyurethane. The silicone has good elasticity, high and low temperature resistance, chemical stability, and no toxicity and odor. The rubber has good elasticity, sealing performance, wear resistance and fatigue resistance. The polyurethane has high strength, good elasticity, oil resistance and solvent resistance, and its hardness and flexibility can be adjusted according to requirements. At present, the silicone is most commonly used among the three materials, which can adopt a medical grade silicone material, has good biocompatibility, does not cause harm to human health, and ensures the safety of user use.

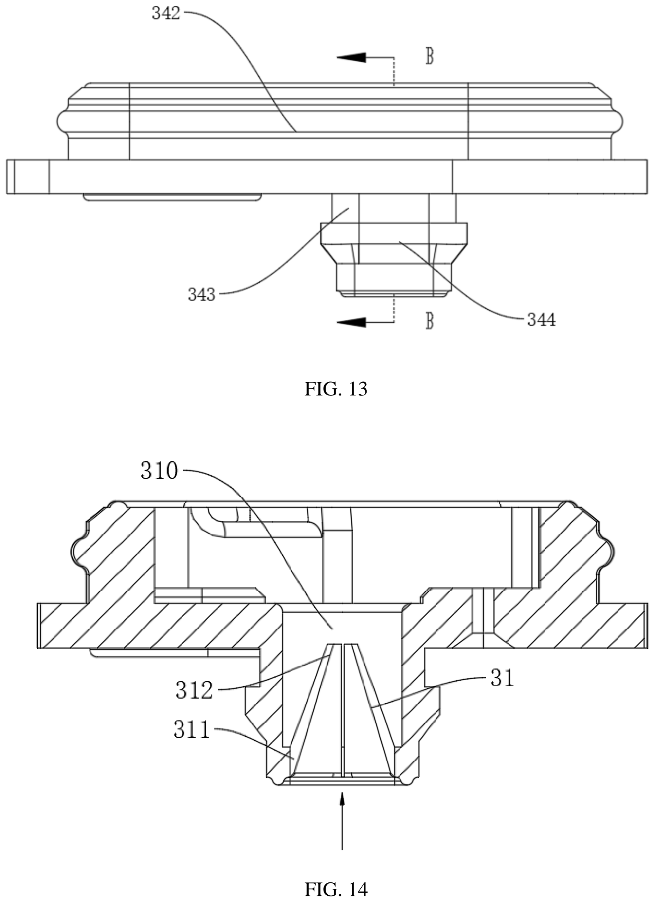

Referring to FIGS. 13 and 14, in some embodiments of the present application, the aerosol generating apparatus includes an airflow channel 310 and an air regulating member 31 disposed on the airflow channel 310.

The air regulating member 31 includes a fixed portion 311 and an air regulating portion 312. The fixed portion 311 is connected with the side wall of the airflow channel 310. The air regulating portion 312 extends towards the airflow channel 310, so that the air regulating member 31 at least partially closes the airflow channel 310. The air regulating portion 312 can elastically deflect relative to the fixed portion 311 to change the closed area of the airflow channel 310.

The air regulating member 31 is inclined from the fixed portion 311 to the air regulating portion 312 towards the airflow direction of the airflow channel 310.

The aerosol generating apparatus generally utilizes the atomization assembly 3104 to atomize the aerosol generating substrate, thereby generating aerosol for user to smoke or use. The aerosol generating apparatus is provided with an airflow channel 310 for airflow circulation. In operation of the apparatus, air or other gas enters from the inlet, flows along the airflow channel 310, interacts with other components in the process of flowing, for example, carries the atomized aerosol through the atomization area, and finally flows out from the outlet for user to use.

The air regulating member 31 is disposed on the airflow channel 310 to regulate the airflow of the airflow channel 310. The fixed portion 311 of the air regulating member 31 is connected with the side wall of the airflow channel 310 to fix the air regulating member 31, so that the air regulating member 31 maintains a stable position in the apparatus and provides a support base for the movement of the air regulating portion 312. The air regulating portion 312 of the air regulating member 31 extends into the airflow channel 310. The air regulating portion 312 can elastically deflect relative to the fixed portion 311. Since the air regulating portion 312 extends into the airflow channel 310, it can affect the circulation of the airflow channel 310, change the closed area of the airflow channel 310 by elastic deformation, and then regulate the airflow.

As shown in FIG. 14, the direction indicated by the arrow is the airflow direction. The air regulating member 31 is inclined from the fixed portion 311 to the air regulating portion 312 towards the airflow direction of the airflow channel 310, and the inclination direction from the fixed portion 311 to the air regulating portion 312 is consistent with the airflow direction in the channel. Such an inclined design helps the air regulating member 31 to better sense the force of the airflow and to be elastically deflected more effectively according to the action of the airflow, thereby more accurately adjusting the closed area of the airflow channel 310. When the airflow impacts the air regulating member 31, the airflow can more smoothly act on the air regulating portion 312 due to the same inclination direction, so that the air regulating portion 312 is more easily elastically deflected, thereby solving the problem of reduced airflow regulation function of the air regulating member 31 caused by adhesion of liquid. Meanwhile, the air regulating portion 312 has a smaller elastic deflection angle in the case of the same opening degree of the air regulating member 31, and can better maintain a larger opening degree.

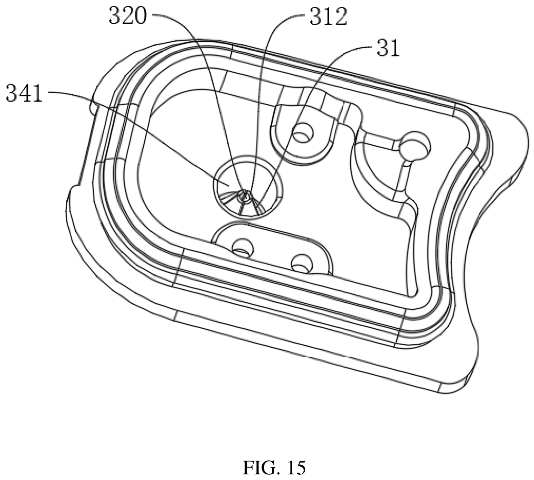

Referring to FIG. 15, in some embodiments of the present application, the aerosol generating apparatus includes a plurality of air regulating members 31, which are arranged along the circumference of the airflow channel 310 to form a conical structure towards the airflow direction.

In this embodiment, the plurality of air regulating members 31 are distributed along the circumference of the airflow channel 310 to form a conical structure, and the conical structure has the effect of guiding the airflow. The opening of the conical structure is towards the airflow direction, so that the airflow can be effectively guided and concentrated when entering the airflow channel 310. The airflow flows along the inner wall of the conical structure and gradually converges to the center, and such a guiding effect can avoid turbulence and vortex phenomena of the airflow in the channel, so that the airflow can pass through the airflow channel 310 more smoothly. Moreover, the conical structure can also accelerate the airflow. When the airflow flows from the large end to the small end of the conical structure, the airflow speed gradually increases due to the gradually reduced channel cross-sectional area according to the fluid continuity principle, thereby increasing the kinetic energy of the airflow, so that the air regulating member 31 is more easily opened.

Referring to FIG. 15, in some embodiments of the present application, the airflow channel 310 includes an initial airflow channel 320, and the plurality of air regulating members 31 are arranged along the circumference of the initial airflow channel 320 to enclose the plurality of air regulating portions 312 to form the initial airflow channel 320.

The airflow channel 310 includes the open initial airflow channel 320, and the airflow can first pass through the initial airflow channel 320 to form an initial breakthrough, thereby reducing the difficulty of opening the air regulating member 31 due to adhesion. The initial airflow channel 320 is actually enclosed by the air regulating portions 312 in the circumferential direction. When the airflow flows through the initial airflow channel 320, the air regulating portions 312 of the plurality of air regulating members 31 are simultaneously impacted, and the air regulating portions 312 are elastically deflected under the impact of the airflow, thereby changing the closed area of the initial airflow channel 320. This design ingeniously utilizes the impact force of the airflow to achieve self-regulation of the airflow, thereby reducing the difficulty of opening the air regulating member 31.

Referring to FIG. 14, in some embodiments of the present application, the thickness of the air regulating member 31 gradually decreases from the fixed portion 311 to the air regulating portion 312. The fixed portion 311 has a larger thickness, while the air regulating portion 312 has a smaller thickness. The thicker fixed portion 311 can better withstand these forces and maintain good elasticity after multiple deformations, preventing the air regulating member 31 from being damaged or falling off from the fixed position. The thinner thickness of the air regulating portion 312 allows it to deform to a certain extent under smaller airflow pressure, thereby ensuring the sensitivity of airflow regulation. In addition, the thinner thickness of the air regulating portion 312 can effectively reduce the mutual adhesion caused by liquid adhesion. This is because the thinner air regulating portion 312 has a smaller area for liquid adhesion, thereby reducing the possibility of adhesion between multiple air regulating portions 312.

In some embodiments of the present application, the thickness of the air regulating member 31 is 0.1mm to 0.5mm. This ensures that the air regulating member 31 has sufficient strength to withstand airflow pressure and maintains a certain elasticity to achieve the airflow regulation function. The material of the air regulating member 31 can be silicone, rubber, or polyurethane. The silicone has good elasticity, high-temperature resistance, low-temperature resistance, chemical stability, and no toxicity and odor. The rubber has good elasticity, sealing performance, wear resistance, and fatigue resistance. The polyurethane has high strength, good elasticity, oil resistance, and solvent resistance, and its hardness and flexibility can be adjusted according to requirements. At present, the silicone is most commonly used among the three materials, which can be of medical-grade silicone material, has good biocompatibility, does not cause harm to human health, and ensures the safety of user use.

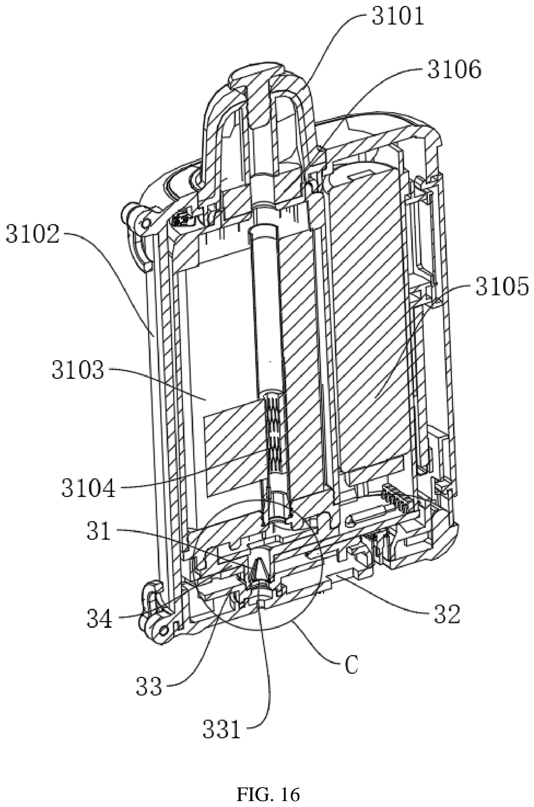

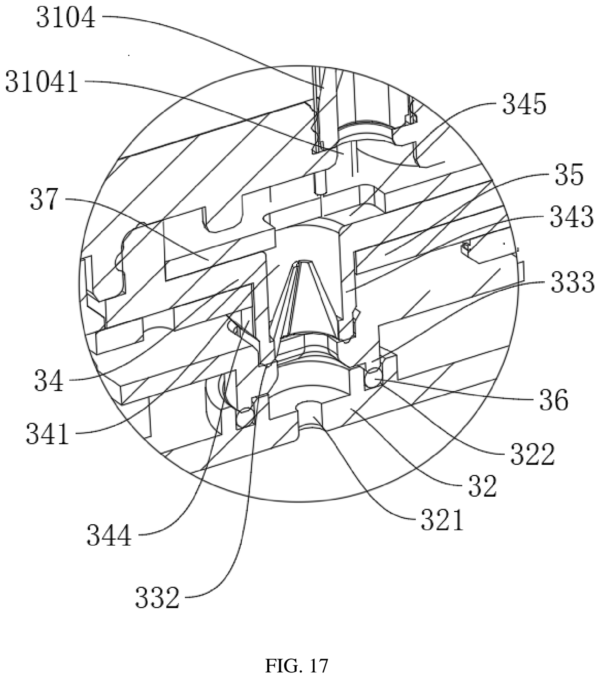

Referring to FIGS. 16 and 17, in some embodiments of the present application, the aerosol generating apparatus includes: a bottom cover 32, an atomization assembly 3104, an isolation bracket 34, and a fixed portion 311.

The bottom cover 32 is provided with a first air hole 321.

The atomization assembly 3104 is provided with a fourth air hole 31041.

The isolation bracket 34 is arranged between the atomization assembly 3104 and the bottom cover 32. The isolation bracket 34 is provided with a third air hole 341, and the first air hole 321, the fourth air hole 31041, and the third air hole 341 are communicated to form an airflow channel 310.

The fixed portion 311 is connected to the isolation bracket 34, and the air regulating portion 312 extends to the airflow channel 310, so that the air regulating member 31 at least partially closes the third air hole 341.

In this embodiment, the aerosol generating apparatus is composed of the bottom cover 32, the atomization assembly 3104, the isolation bracket 34, and the like. The first air hole 321 on the bottom cover 32 is the starting end of the entire airflow channel 310 and is responsible for guiding external air into the apparatus. The atomization assembly 3104 is provided with a fourth air hole 31041, which is a key area for aerosol generation. The airflow passing through the fourth air hole 31041 carries the atomized substance. The isolation bracket 34 is arranged between the atomization assembly 3104 and the bottom cover 32, and a third air hole 341 on the isolation bracket 34 connects the first air hole 321 and the fourth air hole 31041, so that the three air holes are in communication to form a complete air flow channel 310.

The fixed portion 311 of the air regulating member 31 is connected to the isolation bracket 34, and the air regulating portion 312 extends to the air flow channel 310 and at least partially closes the third air hole 341. In this way, the air regulating member 31 can directly regulate the airflow passing through the third air hole 341. In this way, the air regulating member 31 is stable, and the air regulating portion 312 can effectively act on the airflow to regulate the airflow.

In some embodiments, the aerosol generating apparatus further includes a mouthpiece 3101, a shell assembly 3102, a liquid reservoir assembly 3103, an atomization assembly 3104, and a battery assembly 3105, etc. The liquid reservoir assembly 3103 is internally provided with an atomization cavity and a liquid storage cavity, the liquid storage cavity and the atomization cavity are communicated through a liquid guiding structure, the atomization cavity is internally provided with the atomization assembly 3104, and the battery assembly 3105 is connected with the liquid reservoir assembly 3103. The mouthpiece 3101 is connected with the shell assembly 3102 through buckling, and an oil absorption assembly 3106 is further arranged at the mouthpiece 3101. The bottom cover 32 and the fixed base 33 construct a basic air flow channel 310 structure, so that the external airflow can orderly enter the inside of the apparatus. The mouthpiece 3101 as a component directly contacted by the user is connected with the shell assembly 3102 through buckling, so that the mouthpiece 3101 is convenient to mount and dismount, is convenient for later maintenance, and is stable in structure. The oil absorption assembly 3106 arranged at the mouthpiece 3101 can effectively prevent the liquid in the liquid storage bin from entering the oral cavity along with the airflow during use, and improve the use experience and safety.

The shell assembly 3102 not only provides protection for the internal components, but also affects the overall appearance and portability of the apparatus to some extent. The liquid reservoir assembly 3103 is a key part, and is internally provided with an atomization cavity and a liquid storage cavity, which are communicated through a liquid guiding structure. The liquid storage cavity is used for storing liquid raw materials, and the liquid guiding structure can accurately control the liquid to flow to the atomization cavity, so that stable raw material supply is provided for the atomization process. The atomization assembly 3104 in the atomization cavity converts the liquid entering the atomization cavity into aerosol under the driving of the electric energy provided by the battery assembly 3105. The battery assembly 3105 is connected with the liquid reservoir assembly 3103, not only supplies power for the atomization assembly 3104, but also cooperates with the circuit system of the whole apparatus to ensure that the components orderly run, and the power reserve and the power supply stability directly affect the endurance and performance of the apparatus.

In some embodiments of the present application, the isolation bracket 34 and the air regulating member 31 are integrally formed. The isolation bracket 34 and the air regulating member 31 adopt an integrated structure, meaning that there is no traditional connection between them. In this way, problems such as loosening, falling off, and air leakage at the connection position are completely eliminated. During the operation of the aerosol generating apparatus, the impact of airflow and the vibration of the apparatus can affect the connection position, and the integrated structure avoids these potential risks, greatly improving the stability and reliability of the apparatus structure. The material of the isolation bracket 34 can be the same as that of the air regulating member 31, and can also be silica gel, rubber, or polyurethane.

The integrated structure makes the isolation bracket 34 and the air regulating member 31 an integral whole, and they are more consistent in material continuity and mechanical properties. Compared with an assembled structure, the integrated component can better withstand external forces, and especially when the airflow impacts the air regulating member 31, the entire structure can more evenly disperse stress and reduce local stress concentration. This helps to prolong the service life of the component and improve the overall durability of the apparatus.

In some embodiments of the present application, as shown in FIGS. 13- 15, the isolation bracket 34 includes a bracket main body 342 and a protruding portion 343 connected to the bracket main body 342. The third air hole 341 is located in the protruding portion 343 and penetrates through the bracket main body 342. The fixed portion 311 is connected to the protruding portion 343, and the air regulating portion 312 is located in the third air hole 341.

In this embodiment, the isolation bracket 34 mainly includes the bracket main body 342 and the protruding portion 343 connected to the bracket main body 342, and the third air hole 341 is located in the protruding portion 343 and penetrates through the bracket main body 342. The fixed portion 311 of the air regulating member 31 is connected to the protruding portion 343, ensuring the stable installation of the air regulating member 31 as a whole. The air regulating portion 312 is located in the third air hole 341, and can be protected in multiple aspects. From the physical aspect, the third air hole 341 can prevent the air regulating portion 312 from being damaged due to accidental collision inside the apparatus. During the operation of the apparatus, internal components can be displaced due to vibration, and if the air regulating portion 312 is exposed, it is prone to friction or collision with other components, resulting in deformation or even damage and affecting the airflow regulating function of the air regulating member 31. However, in the third air hole 341, the air regulating portion 312 is effectively isolated, greatly reducing such risks.

From the perspective of airflow influence, the third air hole 341 has a certain flow regulating effect on the incoming airflow. When the airflow enters from the first air hole 321 of the bottom cover 32, flows through the third air hole 341, and flows to the fourth air hole 31041 of the atomization assembly 3104, the airflow direction and speed are regulated to a certain extent during the process of passing through the third air hole 341. This avoids excessive impact force of the turbulent airflow on the air regulating portion 312, prevents the air regulating portion 312 from being excessively deformed due to bearing abnormal airflow impact, and further ensures that the air regulating portion 312 can always work within a suitable elastic deformation range and maintain the accuracy of airflow regulation.

Referring to FIGS. 16 and 17, in some embodiments of the present application, the aerosol generating apparatus further includes a main board 35, the main board 35 and the atomization assembly 3104 are electrically connected. The main board 35 is arranged between the isolation bracket 34 and the bottom cover 32, the main board 35 is provided with a positioning hole, and the protruding portion 343 is arranged in the positioning hole.

In this embodiment, the main board 35 and the atomization assembly 3104 are electrically connected, the main board 35 can provide power support for the atomization assembly 3104, and the working state of the atomization assembly 3104 is controlled. The main board 35 is arranged between the isolation bracket 34 and the bottom cover 32, and this position arrangement has various considerations. On the one hand, placing the main board 35 at this position can make full use of the space inside the apparatus, and the layout of each component is more compact and reasonable. On the other hand, such a position can isolate the atomization assembly 3104 and the main board 35 through the isolation bracket 34, preventing the atomization assembly 3104 from affecting the normal work of the main board 35.

The positioning hole provided on the main board 35 is matched with the protruding portion 343 of the isolation bracket 34, and the protruding portion 343 is arranged in the positioning hole. This design plays an accurate positioning role, ensuring the accurate position of the isolation bracket 34 in the apparatus. In the assembly process of the apparatus, the isolation bracket 34 can be quickly and accurately installed by inserting the protruding portion 343 into the positioning hole, improving the assembly efficiency. Due to the accurate installation of the isolation bracket 34, the position accuracy of the third air hole 341 is ensured, and the normal operation of the air flow channel 310 is ensured.

Referring to FIGS. 13 and 17, in some embodiments of the present application, the isolation bracket 34 further includes an elastically compressible snap-fit portion 344, the snap-fit portion 344 is arranged outside the protruding portion 343, and the snap-fit portion 344 is clamped on the side of the main board 35 away from the isolation bracket 34. The snap-fit portion 344 of the isolation bracket 34 has the characteristic of being elastically compressible. This means that it can be elastically deformed when subjected to external force, and can return to the original shape after the external force disappears. This elastic property enables the snap-fit portion 344 to directly force the protruding portion 343 to pass through the main board 35 when matched with the main board 35, thereby realizing clamping.

In some embodiments of the present application, the isolation bracket 34 includes a plurality of snap-fit portions 344, the plurality of snap-fit portions 344 are arranged at intervals along the circumference of the protruding portion 343, so that the snap-fit portions 344 are more easily compressed, thereby improving the assembly convenience.

Referring to FIG. 16 and FIG. 17, in some embodiments of the present application, the aerosol generating apparatus includes a fixed base 33, the main board 35 is connected to the fixed base 33, and the fixed base 33 is provided with a second air hole 331. The fixed base 33 is provided with a positioning groove 332 along the circumference of the second air hole 331, and the protruding portion 343 is abutted in the positioning groove 332, so that the third air hole 341 and the second air hole 331 are in communication.

In this embodiment, the fixed base 33 provides an important structural support for the entire aerosol generating apparatus, and the main board 35 is connected to the fixed base 33, so that the main board 35 has a stable mounting position in the apparatus. This helps to ensure that the electronic components and circuit systems on the main board 35 remain stable during apparatus operation, avoiding problems such as poor electrical connection or component damage caused by shaking or displacement, thereby ensuring stable and reliable electrical performance of the apparatus. The second air hole 331 provided on the fixed base 33 is in communication with the third air hole 341 on the isolation bracket 34, ensuring the circulation of airflow,

the positioning groove 332 provided on the fixed base 33 along the circumference of the second air hole 331 is matched with the protruding portion 343 of the isolation bracket 34. The protruding portion 343 is abutted in the positioning groove 332, and this design plays a role in accurate positioning. It ensures that the position of the isolation bracket 34 on the fixed base 33 is accurate, so that the third air hole 341 and the second air hole 331 can be accurately aligned and in communication, thereby ensuring that the airflow can smoothly pass through the two air holes and will not be blocked or leaked due to positional deviation.

Referring to FIG. 16 and FIG. 17, in some embodiments of the present application, the aerosol generating apparatus further includes a sealing member 36. The bottom cover 32 is provided with an annular groove 322, and the sealing member 36 is arranged in the annular groove 322. The fixed base 33 includes an annular flange 333, the second air hole 331 is arranged in the annular flange 333, the annular flange 333 is arranged in the annular groove 322, and the annular flange 333 is abutted with the sealing member 36.

In this embodiment, the annular groove 322 provided on the bottom cover 32 is the mounting position for the sealing member 36. The annular groove 322 is sized and shaped to fit the sealing member 36, and can accurately accommodate the sealing member 36 to keep it in a stable position in the apparatus. The sealing member 36 is arranged in the annular groove 322, and the sealing member 36 is usually made of materials with good elasticity and sealing performance, such as rubber, silica gel, etc. Its role is to fill the gap between the bottom cover 32 and the fixed base 33, preventing airflow from leaking from the connection part. When the apparatus is in operation, the sealing member 36 can withstand certain pressure and deformation, always maintaining a good sealing state, ensuring that the airflow can only flow according to the predetermined air flow channel 310.

The annular flange 333 of the fixed base 33 corresponds to the annular groove 322 of the bottom cover 32, and the second air hole 331 is arranged in the annular flange 333. The annular flange 333 is arranged in the annular groove 322 and abuts against the sealing member 36. This structure design makes the connection between the fixed base 33 and the bottom cover 32 more close. The annular flange 333 applies certain pressure to the sealing member 36 to cause elastic deformation of the sealing member 36, further fills the micro gaps at the connection part, and enhances the sealing effect.

Referring to FIG. 17, the isolation bracket 34 is provided with an accommodating groove 345 on the side facing the atomization assembly 3104, and the accommodating groove 345 is provided with an adsorption member 37. The isolation bracket 34 is provided with the accommodating groove 345 on the side facing the atomization assembly 3104, and this design provides a specific mounting space for the adsorption member 37. The adsorption member 37 can be made of oil absorption cotton, inorganic fiber material, porous material, etc., and has good adsorption performance. The main function of the adsorption member 37 is to adsorb possible liquid to prevent the liquid from leaking to the air regulating member 31. In the aerosol generating apparatus, liquid can overflow when the atomization assembly 3104 is working or flow when the apparatus is tilted. If the liquid contacts the air regulating member 31, the performance of the air regulating member 31 can be affected, for example, the elastic property of the air regulating member 31 is changed, so that the air regulating member 31 cannot accurately regulate the closed area of the air flow channel 310, thereby affecting the generation of aerosol and the normal operation of the apparatus. The adsorption member 37 can timely absorb the liquid, thereby protecting the air regulating member 31.

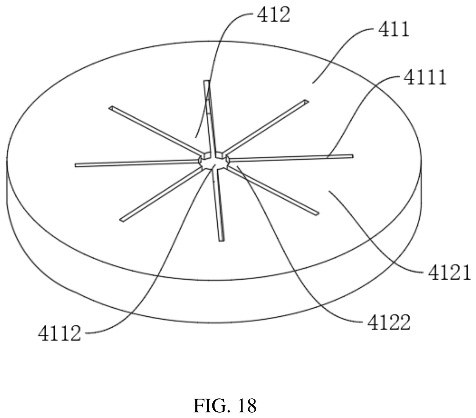

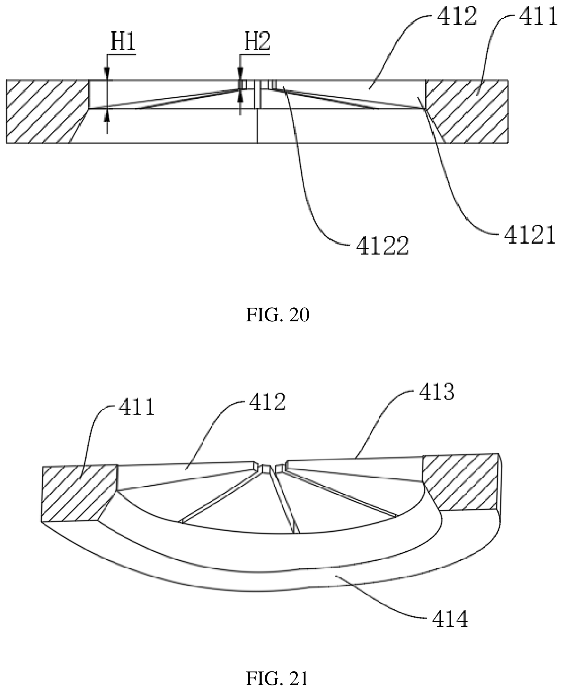

Referring to FIGS. 18 and 20, the air regulating assembly 41 provided by the embodiment of the application for the aerosol generating apparatus includes: a base member 411 and a plurality of air regulating members 412.

The base member 411 is provided with a first through hole 4111.

The plurality of air regulating members 412 are arranged along the circumference of the first through hole 4111. Each air regulating member 412 includes a fixed portion 4121 and an air regulating portion 4122. The fixed portion 4121 is connected to the base member 411, and the air regulating portion 4122 extend towards the first through hole 4111, so that the plurality of air regulating members 412 at least partially close the first through hole 4111.

The air regulating portion 4122 is elastically deflect relative to the fixed portion 4121 to change the closed area of the first through hole 4111.

The air regulating assembly 41 in the embodiment is used in the aerosol generating apparatus, and the aerosol generating apparatus generally uses an atomization assembly 4104 to atomize an aerosol generating substrate to generate aerosol for a user to smoke or use. The aerosol generating apparatus is provided with an air flow channel for airflow circulation. When the apparatus is in operation, air or other gas enters from an inlet, flows along the air flow channel, interacts with other components in the process of flowing, for example, carries the atomized aerosol through the atomization area, and finally flows out from an outlet for the user to use. The air regulating assembly 41 is arranged on the air flow channel to regulate the airflow of the air flow channel.

In the embodiment, the air regulating assembly 41 includes a base member 411 and a plurality of air regulating members 412. The base member 411 is a basic support structure of the air regulating assembly 41. A first through hole 4111 provided on the base member 411 is a channel for airflow to flow through the air regulating assembly 41. The plurality of air regulating members 412 are arranged along the circumference of the first through hole 4111. Each air regulating member 412 has a fixed portion 4121 and an air regulating portion 4122. The fixed portion 4121 is connected to the base member 411, and the air regulating portion 4122 extends towards the first through hole 4111. The air regulating portions 4122 of the plurality of air regulating members 412 jointly at least partially close the first through hole 4111. The partially closed state means that the air regulating members 412 form a blockage to the airflow passing through the first through hole 4111, thereby providing a basis for regulating the airflow.

The air regulating portion 4122 of the air regulating member 412 has an elastic deflection characteristic relative to the fixed portion 4121, which means that the air regulating member 412 needs to be made of an elastic material to generate the elastic deflection. The elastic deflection of the air regulating member 412 can change the closed area of the first through hole 4111. When the airflow passes through the first through hole 4111 in the aerosol generating apparatus, the airflow acts on the air regulating portion 4122 of the air regulating member 412. Since the air regulating portion 4122 is elastic, the air regulating portion 4122 is elastically deformed under the influence of the airflow force, thereby changing the relative position relationship between the air regulating portion 4122 and the first through hole 4111. When the user's puffing strength is small, the airflow and the pressure difference are also small, the air regulating portion 4122 is closer to the center of the first through hole 4111, the effective flow area of the first through hole 4111 is reduced, and the airflow flow rate is reduced accordingly. Conversely, when the user's puffing strength is large, the airflow is also large, the air regulating portion 4122 is deflected away from the center of the first through hole 4111 under the action of the airflow, the effective flow area of the first through hole 4111 is increased, the airflow flow rate is increased, and the air regulating assembly 41 achieves self-adaptive airflow regulation.

In the embodiment, the plurality of air regulating members 412 are arranged along the circumference of the first through hole 4111. The specific number of the air regulating members 412 can be 2, 3, 4, 5, 8, 10, or etc. according to requirements. The synergistic effect of the plurality of air regulating members 412 can change the closed area of the first through hole 4111 in a larger range, thereby making the change range of the effective flow area wider. When all the air regulating members 412 are elastically deflect to a large extent towards the inside of the first through hole 4111 under the action of the airflow, the closed area of the first through hole 4111 reaches a maximum value, the effective flow area reaches a minimum value, and the airflow flow rate can be reduced to a very low level. Conversely, when all the air regulating members 412 are elastically deflect to the maximum extent away from the center of the first through hole 4111 under the action of the airflow, the closed area of the first through hole 4111 reaches a minimum value, the effective flow area reaches a maximum value, and the airflow flow rate can be increased to a very high level. In this way, the plurality of air regulating members 412 can realize a wider airflow regulation range from a very low flow rate to a very high flow rate, greatly improve the airflow adjustable range compared with a single air regulating member, meet the diversified needs of users for airflow regulation, and improve the overall performance of the apparatus and the user experience.

The plurality of air regulating members 412 can generally adopt a structure with a consistent size, so that the air regulating members 412 are uniformly distributed along the circumference of the first through hole 4111, thereby improving the uniformity of the airflow.

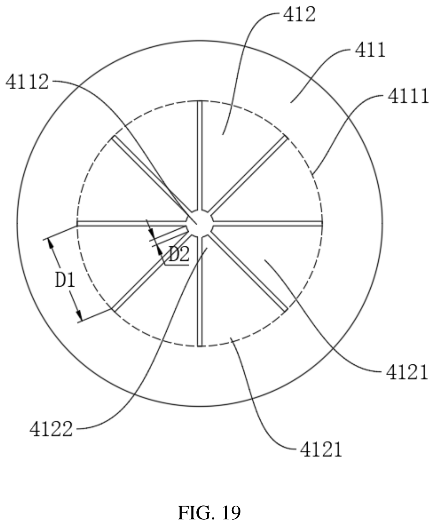

Referring to FIGS. 18 and 19, in some embodiments of the present application, the base member 411 is sheet-like, and the air regulating members 412 extend along the extension direction of the base member 411, so that the air regulating assembly 41 is sheet-like as a whole.

In this embodiment, the base member 411 is sheet-like, and builds a basic sheet structure for the entire air regulating assembly 41. Since the base member 411 is sheet-like, the extension direction of the base member 411 is the general direction of the plane where the base member 411 is located. In this way, the air regulating members 412 extend along the extension direction of the base member 411, so that the base member 411 and the air regulating members 412 are generally in the same plane, thereby making the air regulating assembly 41 sheet-like as a whole. It should be noted that in this embodiment, the air regulating members 412 extend along the extension direction of the base member 411. The base member 411 and the air regulating members 412 are not strictly in the same plane, and a certain deviation therebetween is allowed, as long as the air regulating assembly 41 is sheet-like as a whole. For example, the upper and lower surfaces of the base member 411 and the air regulating members 412 are not flush, and the base member 411 or the air regulating members 412 is slightly curved as a whole, forming an arc-shaped sheet structure.

The air regulating assembly 41 is sheet-like as a whole. This sheet structure design is extremely compact. On the one hand, it can be efficiently arranged in the limited space inside the aerosol generating apparatus. On the other hand, it is convenient for storage and transportation of the air regulating assembly 41, reduces the possibility of part loss, and especially reduces the possibility of damage to the weak air regulating portion 4122 of the air regulating member 412.

Referring to FIGS. 18 and 19, in some embodiments of the present application, the first through hole 4111 includes an open initial air flow channel 4112, and the plurality of air regulating members 412 are arranged along the circumference of the initial air flow channel 4112, so that the plurality of air regulating portions 4122 enclose the initial air flow channel 4112.

In actual use, some liquid can be attached to the air regulating members 412 to cause adhesion of the air regulating members 412. In this embodiment, the first through hole 4111 includes an open initial air flow channel 4112, and the airflow can first pass through the initial air flow channel 4112 to form an initial breakthrough, thereby reducing the difficulty in opening the air regulating members 412 due to adhesion or the like. The initial air flow channel 4112 is actually formed by the air regulating portions 4122 in the circumferential direction. When the airflow passes through the initial air flow channel 4112, the airflow simultaneously impacts the air regulating portions 4122 of the air regulating members 412. Since the air regulating portions 4122 are elastic, the air regulating portions 4122 are elastically deformed under the impact of the airflow, thereby changing the closed area of the initial air flow channel 4112. This design ingeniously utilizes the impact force of the air flow to adjust the air flow itself, thereby reducing the difficulty in opening the air regulating member 412.

Referring to FIGS. 18 and 19, in some embodiments of the present application, the width of the air regulating member 412 gradually decreases from the fixed portion 4121 to the air regulating portion 4122. The length of the air regulating member 412 refers to the distance from the fixed portion 4121 to the air regulating portion 4122, the thickness refers to the distance between the two side surfaces, and the width refers to the dimension perpendicular to the length and thickness directions. For example, as shown in FIG. 19, the width of the air regulating member 412 at the fixed portion 4121 is D1, and the width at the air regulating portion 4122 is D2. D1 is significantly greater than D2, so that the air regulating member 412 has a trapezoidal or triangular structure.

In this embodiment, the fixed portion 4121 of the air regulating member 412 has a relatively large width, thereby providing more stable support and stronger structural strength, and ensuring that the air regulating member 412 is not easily deformed or damaged under the impact of the air flow. As the width gradually decreases when transitioning to the air regulating portion 4122, the air regulating portion 4122 is more easily elastically deformed under the action of the air flow, thereby more sensitively adjusting the air flow.

Referring to FIG. 20, in some embodiments of the present application, the thickness of the air regulating member 412 gradually decreases from the fixed portion 4121 to the air regulating portion 4122. For example, as shown in FIG. 20, the thickness of the air regulating member 412 at the fixed portion 4121 is H1, and the thickness at the air regulating portion 4122 is H2. H1 is significantly greater than H2. That is, the fixed portion 4121 has a greater thickness, and the air regulating portion 4122 has a smaller thickness. The thicker fixed portion 4121 can better withstand these forces and still maintain good elasticity after multiple deformations, thereby preventing the air regulating member 412 from being damaged or falling off from the fixed portion. The thinner thickness of the air regulating portion 4122 enables the air regulating portion 4122 to be deformed to a certain extent under a smaller air flow pressure, thereby ensuring the sensitivity of the air flow adjustment. In addition, the thinner thickness of the air regulating portion 4122 can effectively reduce the mutual adhesion caused by liquid attachment. This is because the thinner air regulating portion 4122 has a smaller area for liquid to adhere, thereby reducing the possibility of adhesion between the plurality of air regulating portions 4122.

In some embodiments of the present application, the material of the air regulating assembly 41 can be silicone, rubber or polyurethane. The silicone has good elasticity, high and low temperature resistance, chemical stability, non-toxicity, and odorlessness. The rubber has good elasticity, sealing performance, wear resistance and fatigue resistance. The polyurethane has high strength, good elasticity, oil resistance, and solvent resistance, and its hardness and flexibility can be adjusted according to requirements. At present, the silicone is most commonly used, which can be made of medical-grade silicone material, has good biocompatibility, does not harm human health, and ensures the safety of users.

In some embodiments of the present application, the thickness of the air regulating member 412 is 0.1mm to 0.2mm. The air regulating member 412 needs to work in an air flow environment with a certain pressure, and the thickness of 0.1mm to 0.2mm can ensure that it has sufficient strength to withstand the air flow pressure and has certain elasticity to realize the air flow regulating function. The thickness of the fixed portion 4121 is close to 0.2mm, and the thickness of the air regulating portion 4122 is close to 0.1mm.

Referring to FIG. 18, in some embodiments of the present application, the base member 411 and the air regulating member 412 are an integrally formed structure. Although the base member 411 and the air regulating member 412 can be prepared separately and then assembled, this not only cannot guarantee the quality, but also greatly affects the production efficiency. In the present embodiment, the base member 411 and the air regulating member 412 are an integrally formed structure, which can be integrally formed by injection molding, die molding or the like.

The integrally formed structure means that there is no connection gap or weak link between the base member 411 and the air regulating member 412, and they are a continuous and complete whole. This greatly enhances the structural strength and stability of the air regulating assembly 41, and when subjected to air flow impact or other external forces, it can better maintain the shape and position, avoiding the influence of the air adjusting function due to the loose or falling connection between the components. Compared with the method of separately manufacturing the base member 411 and the air regulating member 412 and then assembling them, the integrally formed structure reduces the manufacturing steps and process complexity.

Referring to FIGS. 20 and 21, in some embodiments of the present application, the air regulating assembly 41 includes opposite first and second sides 413 and 414. The surface of the first side 413 of the air regulating member 412 is flush with the surface of the first side 413 of the base member 411, and the surface of the second side 414 of the air regulating member 412 is recessed relative to the surface of the second side 414 of the base member 411, so that the thickness of the air regulating member 412 is less than the thickness of the base member 411.

As shown in FIG. 21, the two opposite sides of the air regulating assembly 41 are positioned as the first side 413 and the second side 414. The surfaces of the air regulating member 412 and the base member 411 at the first side 413 are in the same plane. This flush design ensures that the air regulating assembly 41 is flat when assembled with other components, and facilitates the integrated molding process.

At the second side 414 of the air regulating assembly 41, the surface of the air regulating member 412 is lower than the surface of the base member 411, forming a concave structure. The overall thickness of the air regulating member 412 is smaller than the thickness of the base member 411. The base member 411 needs a relatively thick thickness to ensure its strength as the base of the overall structure, while the air regulating member 412 needs a relatively thin thickness to ensure its easy deformation as it needs to be elastically deflected.

Referring to FIGS. 20 and 21, in some embodiments of the present application, the surface of the second side 414 of the air regulating member 412 gradually approaches the surface of the first side 413 from the fixed portion 4121 to the air regulating portion 4122, so that the thickness of the air regulating member 412 gradually decreases from the fixed portion 4121 to the air regulating portion 4122.

In this embodiment, the surface of the second side 414 of the air regulating member 412 gradually approaches the surface of the first side 413 from the fixed portion 4121 to the air regulating portion 4122, which means that the second side 414 of the air regulating member 412 forms an inclined surface from the fixed portion 4121 to the air regulating portion 4122. The inclined surface can guide the air flow to converge on the air regulating portion 4122, making the air regulating portion 4122 more easily deformed under the action of the air flow and enabling the air regulating portion 4122 to respond sensitively to smaller air flow changes. On the other hand, the air flow can generate an oblique component force on the air regulating member 412. This component force is closer to the opening direction of the air regulating member 412, thereby facilitating the opening of the air regulating member 412.

In addition, since the surface of the first side 413 of the air regulating member 412 is flush with the surface of the first side 413 of the base member 411, and the surface of the second side 414 of the air regulating member 412 gradually approaches the surface of the first side 413 from the fixed portion 4121 to the air regulating portion 4122, the thickness of the air regulating member 412 gradually decreases from the fixed portion 4121 to the air regulating portion 4122. The thinner design of the air regulating portion 4122 enables the air regulating member 412 to be elastically deformed more easily when impacted by the air flow. Compared with the air regulating member 412 with a uniform thickness, the air regulating member 412 with a gradually changing thickness can respond more sensitively to the changes in the air flow.

Based on the air regulating assembly 41, the present application further provides an aerosol generating apparatus. The aerosol generating apparatus includes an air flow channel, and the air flow channel is provided with the air regulating assembly 41 of any of the above embodiments. By providing the air regulating assembly 41 on the air flow channel of the aerosol generating apparatus, the air flow channel can be adaptively adjusted, and the adjustment range is large. According to design requirements, the air regulating assembly 41 can be arranged at any position of the air flow channel of the aerosol generating apparatus, for example, at the air inlet of the shell, at the channel of each internal component, or etc.

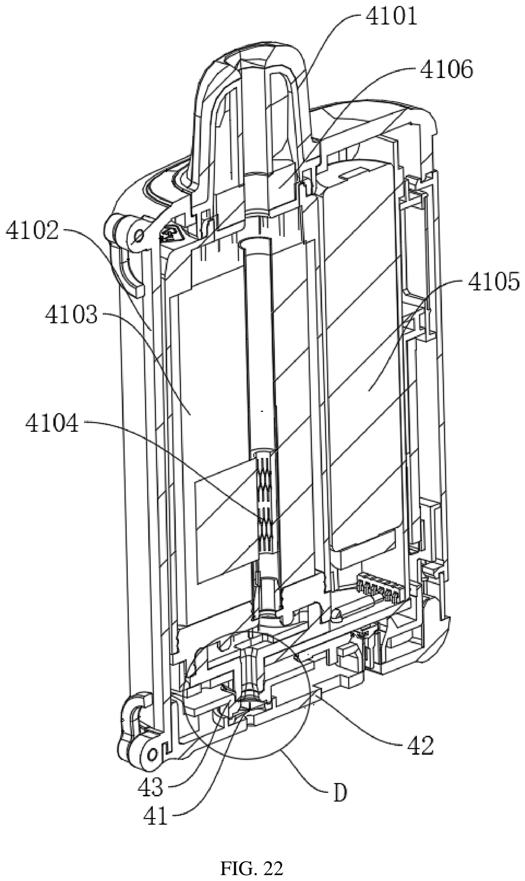

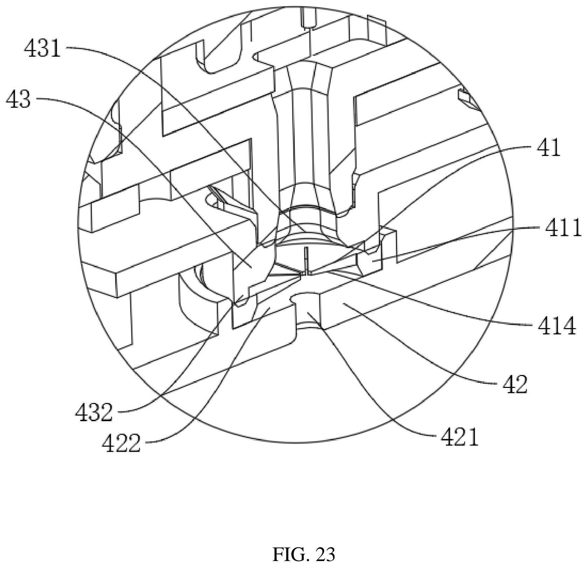

Referring to FIGS. 22 and 23, in some embodiments of the present application, the aerosol generating apparatus includes: a bottom cover 42 and a fixed base 43.

A first air hole 421 is arranged on the bottom cover 42.

The fixed base 43 is connected with the bottom cover 42, and a second air hole 431 is arranged on the fixed base 43. The first air hole 421 and the second air hole 431 are communicated to form an air flow channel.

The air regulating assembly 41 is arranged between the bottom cover 42 and the fixed base 43, and the first through hole 4111 is located between the first air hole 421 and the second air hole 431.

In the embodiment, the bottom cover 42 is a basic component of the aerosol generating apparatus, and the first air hole 421 arranged thereon is an inlet for air flow entering the apparatus. The fixed base 43 is connected with the bottom cover 42. The second air hole 431 arranged on the fixed base 43 is a channel for air flow outflow, and the first air hole 421 and the second air hole 431 jointly form the air flow channel. The air regulating assembly 41 is arranged between the bottom cover 42 and the fixed base 43, and the first through hole 4111 is located between the first air hole 421 and the second air hole 431, so that the air flow in the air flow channel can be directly and adaptively adjusted. Thus, the air regulating assembly 41 can be elastically deformed according to the size and pressure of the air flow, the enclosed area of the first through hole 4111 is changed, and the flow rate and speed of the air flow are accurately controlled.

The combined structure of the bottom cover 42, the fixed base 43, and the air regulating assembly 41 realizes air flow adjustment at the bottom, and is away from the atomization assembly 4104, making the overall layout of the apparatus compact. Moreover, the connection between the components is close, the air flow channel is simple and smooth, and the volume and space occupation of the apparatus are reduced.

Referring to FIG. 22, in addition to the bottom cover 42 and the fixed base 43, the aerosol generating apparatus further includes a mouthpiece 4101, a shell assembly 4102, a liquid reservoir assembly 4103, an atomization assembly 4104, a battery assembly 4105, or etc. The liquid reservoir assembly 4103 is internally provided with an atomization cavity and a liquid storage cavity. The liquid storage cavity and the atomization cavity are communicated through a liquid guide structure. The atomization cavity is internally provided with the atomization assembly 4104, and the battery assembly 4105 is connected with the liquid reservoir assembly 4103. The mouthpiece 4101 is snap-fit connected with the shell assembly 4102, and the mouthpiece 4101 is further provided with an oil absorption assembly 4106. The bottom cover 42 and the fixed base 43 construct a basic air flow channel structure, and ensure that external air flow can orderly enter the inside of the apparatus. The mouthpiece 4101 is directly contacted by a user, and is snap-fit connected with the shell assembly 4102. This connection mode is convenient for installation and disassembly, is beneficial to later maintenance, and can ensure structural stability. The oil absorption assembly 4106 arranged at the mouthpiece 4101 can effectively prevent liquid in the liquid storage bin from entering the oral cavity along with air flow during use, and improve the use experience and safety.

The shell assembly 4102 not only provides protection for the internal components, but also affects the overall appearance and portability of the apparatus. The liquid reservoir assembly 4103 is a key part, which is internally provided with an atomization chamber and a liquid storage chamber, and the two are communicated through a liquid guide structure. The liquid storage chamber is used for storing liquid raw materials, and the liquid guide structure can accurately control the flow of the liquid to the atomization chamber, thereby providing stable raw material supply for the atomization process. The atomization assembly 4104 in the atomization chamber converts the liquid entering the atomization chamber into aerosol under the driving of the battery assembly 4105. The battery assembly 4105 is connected with the liquid reservoir assembly 4103, and not only supplies power for the atomization assembly 4104, but also works with the circuit system of the whole apparatus to ensure the orderly operation of each component. The power reserve and power supply stability of the battery assembly 4105 directly affect the endurance and performance of the apparatus.

Referring to FIG. 22 and FIG. 23, the bottom cover 42 is provided with a mounting groove 422, and the first air hole 421 is located in the mounting groove 422. The fixed base 43 includes an annular flange 432, and the second air hole 431 is located in the annular flange 432. The air regulating assembly 41 is located in the mounting groove 422, and the annular flange 432 is abutted against the side of the base 411 away from the bottom cover 42 to seal the air flow channel.

In this embodiment, the mounting groove 422 on the bottom cover 42 plays an important role in the aerosol generating apparatus. The mounting groove 422 is designed according to the air regulating assembly 41 in size and shape, so that the air regulating assembly 41 can be installed in a precise position. In this way, the air regulating assembly 41 is particularly stable during the operation of the apparatus. No matter the apparatus is frequently started and stopped to generate vibration or shakes due to bad external environment, the air regulating assembly 41 will not be displaced, which ensures that it can accurately adjust the air flow.

The first air hole 421 on the bottom cover 42 is located in the mounting groove 422. As soon as the airflow enters the apparatus from outside, it can come into direct contact with the air regulating assembly 41. Unlike the existing designs, the air flow can lose energy and change direction during transmission. In this application, the air flow can directly impact the air regulating assembly 41, and the air regulating assembly 41 can immediately sense the changes of the parameters such as the speed, pressure and flow of the air flow, and then quickly adjust the air flow to make the air flow adjustment timely and accurately.

The fixed base 43 is provided with an annular flange 432, and the annular flange 432 is matched with the mounting groove 422 on the bottom cover 42. When the apparatus is assembled, the annular flange 432 can be just put into the mounting groove 422 to stably sandwich the air regulating assembly 41. In this way, the air regulating assembly 41 will not shake due to external force. Moreover, the annular flange 432 is close to the side of the base 411 of the air regulating assembly 41 away from the bottom cover 42. When mounted, the gap between them is particularly small, almost none. This forms a good sealing structure. When the apparatus is in operation, the air flow cannot leak out from the connection between the air regulating assembly 41 and the bottom cover 42 and the fixed base 43, but can only flow along the designed air flow channel, enter from the first air hole 421, be adjusted by the air regulating assembly 41, and then flow out from the second air hole 431. In this way, the energy of the air flow is not wasted, and can be used for generating aerosol, thereby improving the overall performance and working efficiency of the apparatus.

Referring to FIG. 22 and FIG. 23, in some embodiments of the present application, the second side 414 of the air regulating assembly 41 faces the first air hole 421. As can be seen from the foregoing embodiments, the surface of the second side 414 of the air regulating member 412 gradually approaches the surface of the first side 413 from the fixed portion 4121 to the air regulating portion 4122, and the second side 414 of the air regulating member 412 forms an inclined surface from the fixed portion 4121 to the air regulating portion 4122. The inclined surface can guide the air flow to converge towards the air regulating portion 4122, and make the air flow generate a component force that is conducive to the opening of the air regulating member 412. The second side 414 of the air regulating assembly 41 faces the first air hole 421, so that the air flow entering the first air hole 421 can directly act on the surface of the second side 414 of the air regulating member 412, thereby achieving the above effect.

The above are only the preferred embodiments of the present application, and are not used to limit the present application. Any modification, equivalent replacement, and improvement made within the spirit and principle of the present application shall be included in the protection scope of the present application.

### Industrial applicability

The scheme provided by the embodiments of the present application can be used in an aerosol generating apparatus and can adaptively adjust the air flow of the aerosol generating apparatus according to the user's drawing force. In the technical scheme provided by the embodiments of the present application, the aerosol generating apparatus includes an air flow channel and an air regulating member. The air regulating member includes a fixed portion and an air regulating portion connected with each other. The fixed portion is relatively fixed with the air flow channel, and the air regulating portion at least partially encloses the air flow channel. The air regulating portion is elastically deflectable relative to the fixed portion to change the enclosed area of the air flow channel. The aerosol generating apparatus includes an air flow channel and an air regulating member. The fixed portion of the air regulating member is relatively fixed with the air flow channel. The air regulating portion at least partially encloses the air flow channel. The air regulating portion is elastically deflectable relative to the fixed portion to change the enclosed area of the air flow channel, so that the air flow is adaptively adjusted.

## Claims

1. An aerosol generating apparatus, **characterized in that** the aerosol generating apparatus comprises:
an air flow channel;
an air regulating member, comprising a fixed portion and an air regulating portion connected to each other, wherein the fixed portion is relatively fixed to the air flow channel, and the air regulating portion at least partially closes the air flow channel; and
the air regulating portion is elastically deflectable relative to the fixed portion to change a closed area of the air flow channel.

2. The aerosol generating apparatus according to claim 1, wherein
the aerosol generating apparatus comprises an air hole component, the air flow channel comprises a first air hole provided on the air hole component; and
the air regulating portion at least partially covers the first air hole to at least partially close the air flow channel, and the air regulating portion is configured to: change a distance between the adjustment portion and the first air hole by elastically deflecting relative to the fixed portion, so as to change the closed area of the air flow channel.

3. The aerosol generating apparatus according to claim 2, wherein the air regulating portion is arranged along a circumference of the fixed portion.

4. The aerosol generating apparatus according to claim 2, wherein
a thickness of the air regulating portion gradually decreases from a side close to the fixed portion to a side away from the fixed portion; and/or
a thickness of the air regulating portion is 0.10 mm to 0.50 mm.

5. The aerosol generating apparatus according to claim 2, wherein the air hole component is provided with a locating column, the fixed portion is provided with a locating groove, and the fixed portion is sleeved on the locating column via the locating groove.

6. The aerosol generating apparatus according to claim 1, wherein the fixed portion is connected to a side wall of the air flow channel, and the air regulating portion extends toward the air flow channel, so that the air regulating member at least partially closes the air flow channel.

7. The aerosol generating apparatus according to claim 6, wherein the air regulating member is inclined from the fixed portion to the air regulating portion toward an airflow direction of the air flow channel.

8. The aerosol generating apparatus according to claim 7, wherein the air regulating member is one of a plurality of air regulating members, the aerosol generating apparatus comprises the plurality of air regulating members, the plurality of air regulating members are arranged along a circumference of the air flow channel to form a conical structure toward the airflow direction.

9. The aerosol generating apparatus according to claim 1, wherein the aerosol generating apparatus comprises:
a bottom cover, provided with a first air hole;
a fixed base, connected with the bottom cover, and provided with a second air hole, wherein the first air hole and the second air hole are in communication to form an air flow channel; and
an air regulating assembly, comprising a base member and a plurality of air regulating members, wherein the base member is provided with a first through hole, the air regulating member is one of the plurality of air regulating members, the plurality of air regulating members are arranged along the circumference of the first through hole, the fixed portion is connected to the base member, the air regulating portion extends toward the first through hole so that the plurality of air regulating members at least partially close the first through hole, and the air regulating portion is elastically deflectable relative to the fixed portion to change a closed area of the first through hole;
wherein
the air regulating assembly is arranged between the bottom cover and the fixed base, and the first through hole is located between the first air hole and the second air hole.

10. The aerosol generating apparatus according to claim 9, wherein
the bottom cover is provided with a mounting groove, and the first air hole is located in the mounting groove;
the fixed base comprises an annular flange, and the second air hole is arranged in the annular flange; and
the air regulating assembly is arranged in the mounting groove, and the annular flange abuts against a side of the base member away from the bottom cover to seal the air flow channel.

11. The aerosol generating apparatus according to claim 9, wherein
a second side of the air regulating assembly is toward the first air hole; and/or
the base member is constructed as a sheet, and the air regulating members extend along the extension direction of the base member, so that the air regulating assembly is sheet-like as a whole; and/or
the first through hole comprises an open initial air flow channel, and the plurality of air regulating members are arranged along the circumference of the initial air flow channel, so that the plurality of air regulating portions enclose to form the initial air flow channel; and/or
a width of the air regulating member gradually decreases from the fixed portion to the air regulating portion; and/or
a thickness of the air regulating member gradually decreases from the fixed portion to the air regulating member; and/or
wherein a thickness of the air regulating member is 0.1 mm to 0.2 mm; and/or
the base member and the air regulating members are integrally formed; and/or
the air regulating assembly comprises a first side and a second side opposite to each other, a surface of the first side of the air regulating member is flush with a surface of the first side of the base member, and a surface of the second side of the air regulating member is recessed with respect to a surface of the second side of the base member, such that a thickness of the air regulating member is less than a thickness of the base member; and/or
the surface of the second side of the air regulating member gradually approaches the surface of the first side from the fixed portion to the air regulating portion, such that a thickness of the air regulating member gradually decreases from the fixed portion to the air regulating portion.

12. An air regulating assembly for the aerosol generating apparatus, **characterized in that** the air regulating assembly comprises:
a base member, provided with a first through hole; and
a plurality of air regulating members, arranged along a circumference of the first through hole, wherein each of the air regulating members comprises a fixed portion and an air regulating portion, the fixed portion is connected to the base member, the air regulating portion extends towards the first through hole, such that the plurality of air regulating members at least partially close the first through hole;
wherein
the air regulating portion is elastically deflectable relative to the fixed portion to change a closed area of the first through hole.

13. The air regulating assembly according to claim 12, wherein
the base member is sheet-like, and the air regulating members extend along the extension direction of the base member, so that the air regulating assembly is sheet-like as a whole; and/or
the first through hole comprises an open initial air flow channel, and the plurality of air regulating members are arranged along the circumference of the initial air flow channel, so that the plurality of air regulating portions enclose to form the initial air flow channel; and/or
a width of the air regulating member gradually decreases from the fixed portion to the air regulating portion; and/or
a thickness of the air regulating member gradually decreases from the fixed portion to the air regulating member; and/or
the thickness of the air regulating member is 0.1 mm to 0.2 mm; and/or
the air regulating member is made of silicone, rubber, or polyurethane; and/or
the base member and the air regulating members are integrally formed.

14. The air regulating assembly of claim 12, wherein the air regulating assembly comprises a first side and a second side opposite to each other, a surface of the first side of the air regulating member is flush with a surface of the first side of the base member, and a surface of the second side of the air regulating member is recessed with respect to a surface of the second side of the base member, such that a thickness of the air regulating member is less than a thickness of the base member.

15. The air regulating assembly of claim 14, wherein the surface of the second side of the air regulating member gradually approaches the surface of the first side from the fixed portion to the air regulating portion, such that the thickness of the air regulating member gradually decreases from the fixed portion to the air regulating portion.
